# EUROPEAN PATENT APPLICATION

(11) **EP 1 755 268 A2**
(43) Date of publication of application: **21.02.2007**
(21) Application number: 06017081.8
(22) Date of filing: 16.08.2006
(51) Int. Cl.: H04L 9/08, H04L 9/00

(54) **Transmission/reception system, transmission/reception method, receiver device, reception method and program for encrypted and non encrypted data**

(30) Priority: 16.08.2005 JP 2005235639
(71) Applicant: SONY CORPORATION, Tokyo (JP)
(72) Inventor: Ogata, Ichiro, Shinagawa-ku Tokyo (JP)
(74) Representative: Melzer, Wolfgang

(57) **Abstract**

The present invention provides a transmission/reception system including a first sender device (1), a second sender device (2), and a receiver device (4). The first device (1) is configured to encrypt stream data by a predetermined encryption method and transmit the encrypted stream data. The second sender device (2) is configured to transmit stream data without encrypting the stream data. The receiver device (4) is configured to receive stream data that is transmitted from the first sender device (1) or the second sender device (2). The receiver device (4) includes a receiver (71) and a generator (72). The receiver (71) is configured to receive the stream data that is transmitted from the first sender device (1) or the second sender device (2). The generator (72) is configured to determine whether the stream data received by the receiver (4) is encrypted, and generate encryption information that indicates the obtained determination result.

## Description

### CROSS REFERENCES TO RELATED APPLICATIONS

The present invention contains subject matter related to Japanese Patent Application JP 2005-235639 filed in the Japanese Patent Office on August 16, 2005, the entire contents of which being incorporated herein by reference.

### BACKGROUND OF THE INVENTION

### 1. Field of the Invention

The present invention relates to a transmission/reception system, transmission/reception method, receiver device, reception method, and program, and more particularly to a transmission/reception system, transmission/reception method, receiver device, reception method, and program for enabling a receiving end to easily handle a digital material transmitted from a transmitting end for reproduction purposes no matter whether it is encrypted.

### 2. Description of the Related Art

In recent years, a transmission/reception system for digital materials (content) has been in widespread use (refer, for instance, to Japanese Patent Application JP 2003-143548). Further, there is a project for playing digital materials in movie theaters, and the transmission/reception system for use in such a project is being studied and developed.

The elements (not shown) constituting such a transmission/reception system would be, for instance, a first server, a second server, a router, and a projector. The first server encrypts and transmits the stream data for a movie. The second server transmits the stream data for movie trailers and commercials without encrypting it. The router selects and transmits the data (output signal) transmitted from the first or second server. The projector receives the data transmitted from the router and plays the movie, trailers, or commercials related to the received data.

### SUMMARY OF THE INVENTION

In the transmission/reception system including the above-mentioned elements, that is, the transmission/reception system including the first server, second server, router, and projector, the projector may receive both encrypted stream data and unencrypted stream data. However, an appropriate method for enabling the projector to handle such stream data in a discriminating manner has not been worked out.

The present invention addresses the circumstances described above, and enables the receiving end to easily handle digital materials delivered from the transmitting end for digital material reproduction purposes no matter whether they are encrypted or not.

According to one embodiment of the present invention, a transmission/reception system includes: a first sender device configured to encrypt stream data by a predetermined encryption method and transmit the encrypted stream data; a second sender device configured to transmit stream data without encryption; and a receiver device configured to receive stream data that is transmitted from the first sender device or the second sender device. The receiver device includes a receiver configured to receive the stream data that is transmitted from the first sender device or the second sender device, and a generator configured to determine whether the stream data received by the receiver is encrypted, and generate encryption information that indicates the obtained determination result.

According to another embodiment of the present invention, a transmission/reception method for a transmission/reception system includes a first sender device configured to encrypt stream data by a predetermined encryption method and transmit the encrypted stream data, a second sender device configured to transmit unencrypted stream data, and a receiver device configured to receive stream data that is transmitted from the first sender device or the second sender device. The receiver device determines whether the received stream data is encrypted, and generates encryption information that indicates the obtained determination result.

The transmission/reception system and transmission/reception method according to an embodiment of the present invention is applied to a transmission/reception system. The sender/receiver system includes a first sender device configured to encrypt stream data by a predetermined encryption method and transmit the encrypted stream data, a second sender device configured to transmit unencrypted stream data, and a receiver device configured to receive stream data that is transmitted from the first sender device or the second sender device. The receiver device within the transmission/reception system determines whether the received stream data is encrypted, and generates encryption information that indicates the obtained determination result.

According to another embodiment of the present invention, a receiver device receives stream data that is encrypted by a first encryption method or receives unencrypted stream data when transmitted to the device. The receiver device includes: a receiver configured to receive the encrypted stream data or the unencrypted stream data; and a generator configured to determine whether the stream data received by the receiver is encrypted, and generate encryption information that indicates the obtained determination result.

The receiver device may further include a decryptor and a decryption controller. The decryptor is configured to perform a first decryption process on encrypted stream data by a first decryption method. The decryption controller is configured to permit the decryptor to perform the first decryption process on the stream data when the encryption information generated by the generator indicates that the stream data is encrypted. The decryption controller is configured to prohibit the decryptor from performing the first decryption process on the stream data when the encryption information generated by the generator indicates that the stream data is not encrypted.

The first encryption method and the first decryption method may be an encryption method and a decryption method that are based on a common key. The common key used for encrypting the stream data may be transmitted to the receiver device. The receiver may further receive the common key. The generator may further supply the common key, which is received by the receiver, to the decryptor when the stream data is determined to be encrypted. The decryptor may perform the first decryption process on the stream data by using the common key that is supplied from the generator.

The generator may further determine before the first decryption process of the decryptor whether the common key is normally prepared, and generate common key preparation information that indicates the obtained determination result. The receiver device may further include an indicator that identifies the state of the receiver device in accordance with the encryption information and the common key preparation information, which are both generated by the generator, and presents the obtained identification result.

The indicator may identify and present a first state, a second state, and a third state. The first state is where unencrypted stream data is received when the encryption information indicates that the stream data is not encrypted. The second state is where encrypted stream data is received and the first decryption process is normally performed on the stream data when the encryption information indicates that the stream data is encrypted and the common key preparation information indicates that the common key is normally prepared. The third state is where encrypted stream data is received but the first decryption process is abnormally performed on the stream data when the encryption information indicates that the stream data is encrypted and the common key preparation information indicates that the common key is not normally prepared.

The indicator may include a lamp that can illuminate in a first color or in a second color. The indicator associates the first state, the second state, and the third state with a first lamp state where the lamp is prohibited from illuminating in the first color or in the second color, a second lamp state where the lamp is allowed to illuminate in the first color only, or a third lamp state where the lamp is allowed to illuminate in the second color only. The indicator exercises control to place the lamp in the first lamp state, in the second lamp state, or in the third lamp state as appropriate in order to present the first state, the second state, or the third state.

The common key may be transmitted to the receiver device after being further encrypted by a second encryption method. The generator may perform a second decryption process on the encrypted common key by a second decryption method, which is related to the second encryption method, when the encrypted common key is received by the receiver. The generator may supply the common key to the decryptor and generate the common key preparation information indicating that the common key is normally prepared when the second decryption process is successfully performed before the first decryption process of the decryptor. The generator may generate in the other situations the common key preparation information indicating that the common key is not normally prepared.

The second encryption method and the second decryption method may be a public key cryptosystem based on a public key and a decryption method that is associated with the public key cryptosystem and based on a private key.

The common key encrypted with the public key may be included in meta data of the stream data that is encrypted with the common key. The meta data may be superposed over the stream data, and the stream data over which the meta data is superposed may be transmitted to the receiver device. The generator may generate the encryption information indicating that the stream data is encrypted, extract the encrypted common key from the meta data, and perform the second decryption process, which uses the private key corresponding to the public key, on the common key when the meta data is superposed over the stream data received by the receiver device. The generator may generate the encryption information indicating that the stream data is not encrypted when the meta data is not superposed over the stream data received by the receiver device.

The stream data may use a plurality of common keys. An identifier other than a special value may be assigned to each of the plurality of common keys. The identifier for each of the plurality of common keys may be included in the meta data. The generator may prohibit the generation of the encryption information indicating that the stream data is encrypted and generate the encryption information indicating that the stream data is not encrypted when the identifier included in the meta data is the special value in a situation where the meta data is superposed over the stream data received by the receiver device.

The receiver device may further include a reproduction controller, which controls the reproduction of first stream data, which is obtained when the decryptor performs the first decryption process on the encrypted stream data, when the decryption controller permits the execution of the first decryption process. The reproduction controller controls the reproduction of second stream data, which is received by the receiver and not encrypted, when the decryption controller prohibits the execution of the first decryption process.

When the common key preparation information indicates that the common key is not normally prepared in a situation where the decryption controller permits the execution of the first decryption process, the reproduction controller may prohibit the reproduction of the first stream data but control the reproduction of data generated according to predefined rules. When the common key preparation information indicates that the common key is normally prepared, the reproduction controller may control the reproduction of the first stream data.

The data whose reproduction is controlled by the reproduction controller instead of the first stream data may be image data corresponding to a predetermined stationary image.

The data whose reproduction is controlled by the reproduction controller instead of the first stream data may be image data corresponding to a predetermined still picture among the first stream data whose reproduction is controlled before the reproduction control of the data.

The encrypted stream data may be transmitted to the receiver device via a first route and the common key used by the encrypted stream data may be transmitted to the receiver device via a second route. The receiver may include a first receiver, which receives the unencrypted stream data or the encrypted stream data transmitted via the first route, and a second receiver, which receives the common key transmitted via the second route.

According to another embodiment of the present invention, a reception method/program is to be executed by a computer for controlling the reception method/hardware of a receiver device that receives stream data transmitted after being encrypted by a predetermined encryption method or stream data transmitted without being encrypted. The reception method/program includes the step of determining whether the stream data received by the receiver device is encrypted and generating encryption information that indicates the obtained determination result.

The receiver device, reception method, and program according to an embodiment of the present invention are applicable to a receiver device/hardware that receives stream data transmitted after being encrypted by a predetermined encryption method or stream data transmitted without being encrypted. The receiver device/hardware determines whether the received stream data is encrypted, and generates encryption information that indicates the obtained determination result.

As described above, an embodiment of the present invention makes it possible to receive unencrypted stream data as well as encrypted stream data. Particularly when steam data constituting a digital material is to be played, the receiving end can easily determine whether the digital material sent from the transmitting end is encrypted. Therefore, the receiving end can easily handle the digital material no matter whether it is encrypted.

### BRIEF DESCRIPTION OF THE DRAWINGS

FIG. 1 is a block diagram illustrating a typical configuration of a transmission/reception system according to an embodiment of the present invention;
FIG. 2 is a block diagram illustrating a typical configuration of a cinema server in the transmission/reception system shown in FIG. 1;
FIG. 3 illustrates a typical position at which meta data generated by the cinema server shown in FIG. 2 is superposed over AV data;
FIG. 4 shows a typical structure of meta data, which includes the data that is used for encryption in the cinema server shown in FIG. 4 and for decryption in a projector shown in FIG. 1;
FIG. 5 shows a typical structure of meta data, which includes the data that is used for encryption in the cinema server shown in FIG. 4 and for decryption in the projector shown in FIG. 1;
FIG. 6 shows a typical structure of meta data, which includes the data that is used for encryption in the cinema server shown in FIG. 4 and for decryption in a projector shown in FIG. 1;
FIG. 7 is a block diagram illustrating a typical configuration of a sub AV server in the transmission/reception system shown in FIG. 1;
FIG. 8 is a block diagram illustrating a typical configuration of a projector in the transmission/reception system shown in FIG. 1;
FIG. 9 is a block diagram illustrating the details of a typical configuration of a meta data extraction section in the projector shown in FIG. 8;
FIG. 10 is a flowchart illustrating a typical process that is performed by the projector shown in FIG. 8;
FIG. 11 is a block diagram illustrating another typical configuration of the transmission/reception system according to an embodiment of the present invention, which differs from the configuration shown in FIG. 1;
FIG. 12 is a block diagram illustrating a typical configuration of the cinema server in the transmission/reception system shown in FIG. 11, that is, a typical configuration that differs from the configuration shown in FIG. 2;
FIG. 13 is a block diagram illustrating a typical configuration of the projector in the transmission/reception system shown in FIG. 11, that is, a typical configuration that differs from the configuration shown in FIG. 8;
FIG. 14 is a block diagram illustrating the details of a typical configuration of the meta data extraction section in the projector shown in FIG. 11, that is, a typical configuration that differs from the configuration shown in FIG. 9; and
FIG. 15 is a block diagram illustrating a typical configuration of a personal computer that executes programs according to an embodiment of the present invention.

### DETAILED DESCRIPTION OF THE PREFERRED EMBODIMENTS

Embodiments of the present invention will now be described. The relationship between the constituent features of the present invention and the embodiments described under "DETAILED DESCRIPTION OF THE PREFERRED EMBODIMENTS" is exemplified below. This statement verifies that the embodiments supporting the present invention are described under "DETAILED DESCRIPTION OF THE PREFERRED EMBODIMENTS." Therefore, even if a certain embodiment is not described here as an embodiment that corresponds to the constituent features of the present invention although the embodiment is described under "DETAILED DESCRIPTION OF THE PREFERRED EMBODIMENTS," it does not mean that the embodiment does not correspond to the constituent features. Conversely, even if the embodiment is described here as an embodiment that corresponds to the constituent features, it does not mean that the embodiment does not correspond to the other constituent features.

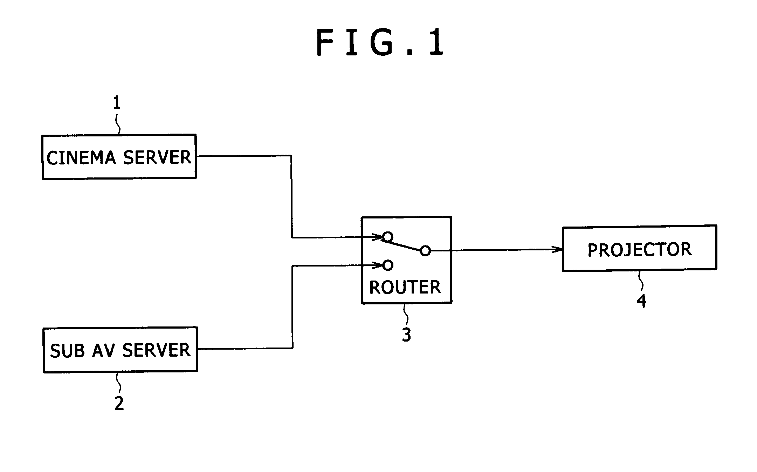

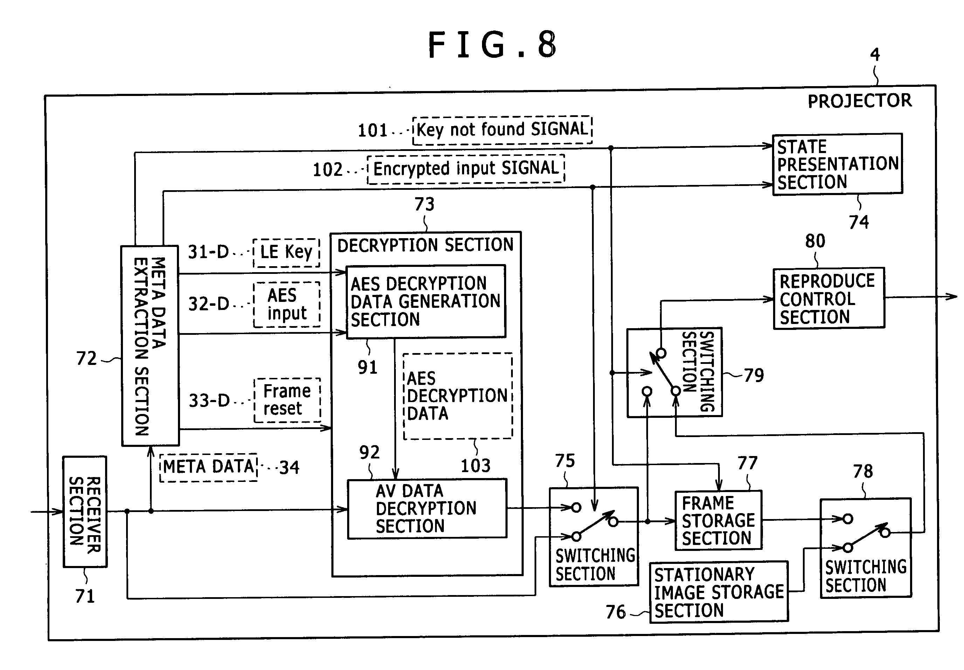

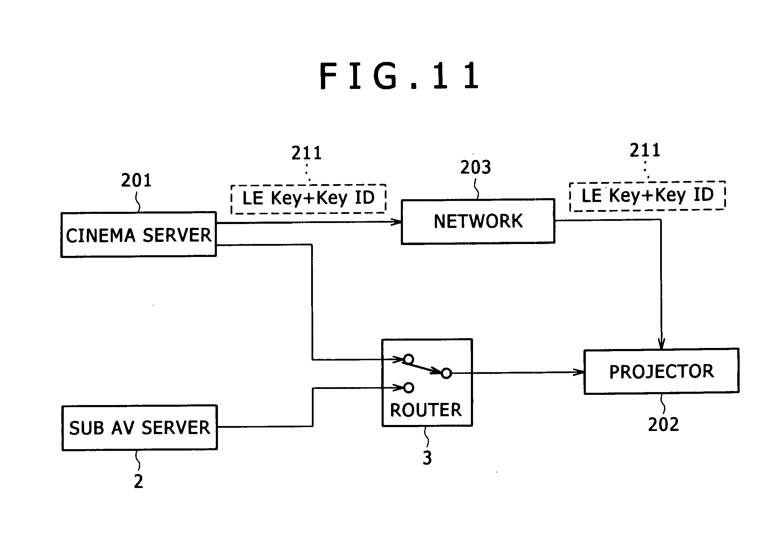

The transmission/reception system (e.g., the transmission/reception system shown in FIG. 1 or FIG. 11; however, the following description merely deals with the transmission/reception system shown in FIG. 1) according to an embodiment of the present invention includes a first sender device, a second sender device, and a receiver device. The first sender device (e.g., a cinema server 1 shown in FIG. 1) encrypts stream data by a predetermined encryption method and transmits the encrypted stream data. The second sender device (e.g., a sub AV server 2 shown in FIG. 1) transmits stream data without encrypting encryption. The receiver device (e.g., a projector 4 that is shown in FIG. 1 and configured as indicated in FIG. 8) receives stream data transmitted from the first or second sender device. The receiver device includes a receiver (e.g., a receiver section 71 shown in FIG. 8) and a generator (e.g., a meta data extraction section 72 shown in FIG. 8). The receiver receives the stream data transmitted from the first or second sender device. The generator determines whether the stream data received by the receiver is encrypted, and generates encryption information (e.g., an Encrypted input signal 102 shown in FIG. 8) that indicates the obtained determination result.

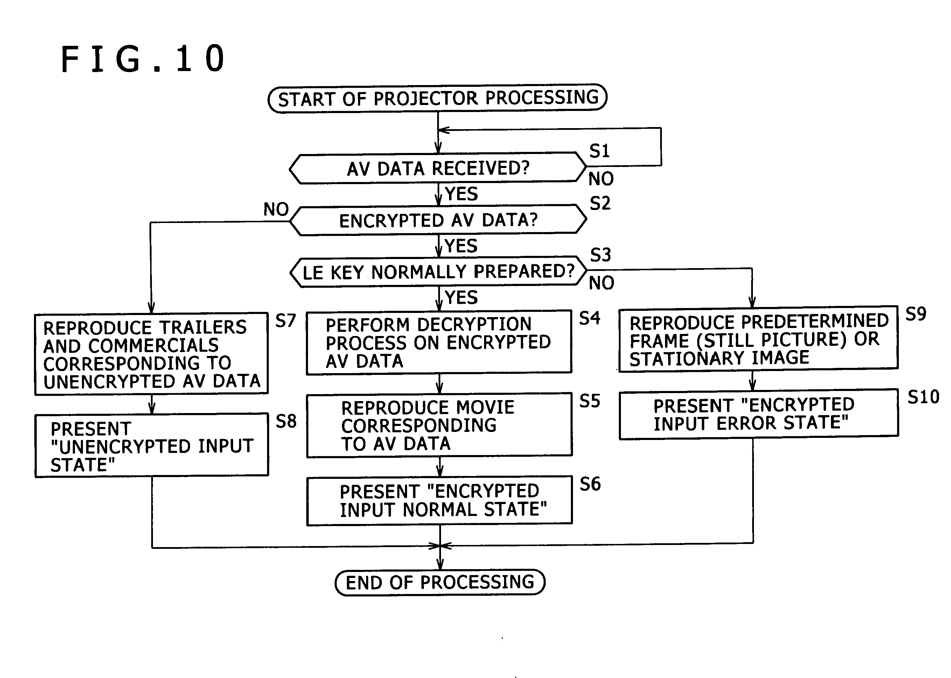

The reception method according to an embodiment of the present invention is a reception method for the above-mentioned transmission/reception system according to an embodiment of the present invention. The receiver device (e.g., the projector 4 that is shown in FIG. 1 and configured as indicated in FIG. 8) includes the step of determining whether the received stream data is encrypted and generating encryption information that indicates the obtained determination result (e.g., step S2 shown in FIG. 10).

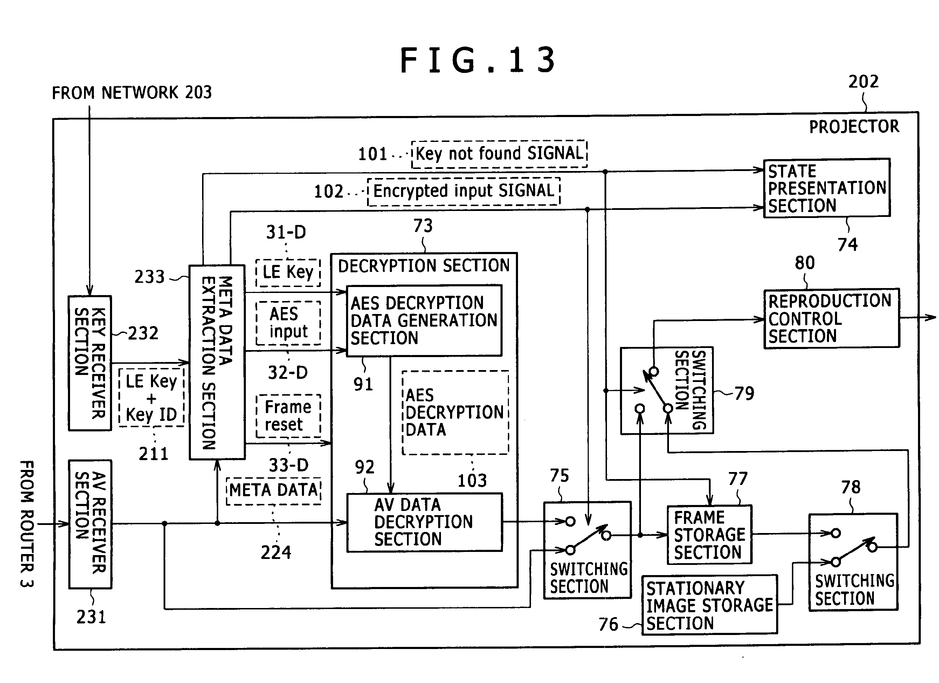

The receiver device according to an embodiment of the present invention (e.g., the projector 4 that is shown in FIG. 1 and configured as indicated in FIG. 8 or a projector 202 that shown in FIG. 11 and configured as indicated in FIG. 13; however, the following description deals with projector 4 except in a situation where only projector 202 is supported) receives stream data. The stream data are transmitted after being encrypted by a first encryption method (e.g., encrypted AV data transmitted from the cinema server 1 shown in FIG. 1) or are transmitted without being encrypted (e.g., unencrypted AV data transmitted from the sub AV server 2 shown in FIG. 1). The receiver device includes a receiver (e.g., the receiver section 71 shown in FIG. 8) and a generator (e.g., the meta data extraction section 72 shown in FIG. 8). The receiver receives the encrypted or unencrypted stream data. The generator determines whether the stream data received by the receiver is encrypted, and generates encryption information (e.g., the Encrypted input signal 102 shown in FIG. 8) that indicates the obtained determination result.

The receiver device further includes a decryptor (e.g., a decryption section 73 shown in FIG. 8) and a decryption controller (e.g., a switching section 75 shown in FIG. 8). The decryptor performs a first decryption process on encrypted stream data by a first decryption method that corresponds to the first encryption method. The decryption controller permits the decryptor to perform the first decryption process on the stream data when the encryption information generated by the generator indicates that the stream data is encrypted, and prohibits the decryptor from performing the first decryption process on the stream data when the encryption information generated by the generator indicates that the stream data is not encrypted.

The first encryption method and the first decryption method are an encryption method and a decryption method that are based on a common key (e.g., an LE key 31-D shown in FIG. 8). The common key used for encrypting the stream data is transmitted to the receiver device. The receiver further receives the common key. The generator further supplies the common key, which is received by the receiver, to the decryptor when the stream data is determined to be encrypted. The decryptor performs the first decryption process on the stream data by using the common key that is supplied from the generator.

The generator further determines before the first decryption process of the decryptor whether the common key is normally prepared, and generates common key preparation information (e.g., a Key not found signal 101 shown in FIG. 8) that indicates the obtained determination result. The receiver device further includes a presenter (e.g., a state presentation section 74 shown in FIG. 8) that identifies the state of the receiver device in accordance with the encryption information and the common key preparation information, which are both generated by the generator, and presents the obtained identification result.

The presenter identifies and presents a first state (e.g., an "unencrypted input state" mentioned in step S8, which is shown in FIG. 10), a second state (e.g., an "encrypted input normal state" mentioned in step S6, which is shown in FIG. 10), or a third state (e.g., an "encrypted input error state" mentioned in step S10, which is shown in FIG. 10). The first state is where unencrypted stream data is received when the encryption information indicates that the stream data is not encrypted. The second state is where encrypted stream data is received and the first decryption process is normally performed on the stream data when the encryption information indicates that the stream data is encrypted and the common key preparation information indicates that the common key is normally prepared. The third state is where encrypted stream data is received but the first decryption process is abnormally performed on the stream data when the encryption information indicates that the stream data is encrypted and the common key preparation information indicates that the common key is not normally prepared.

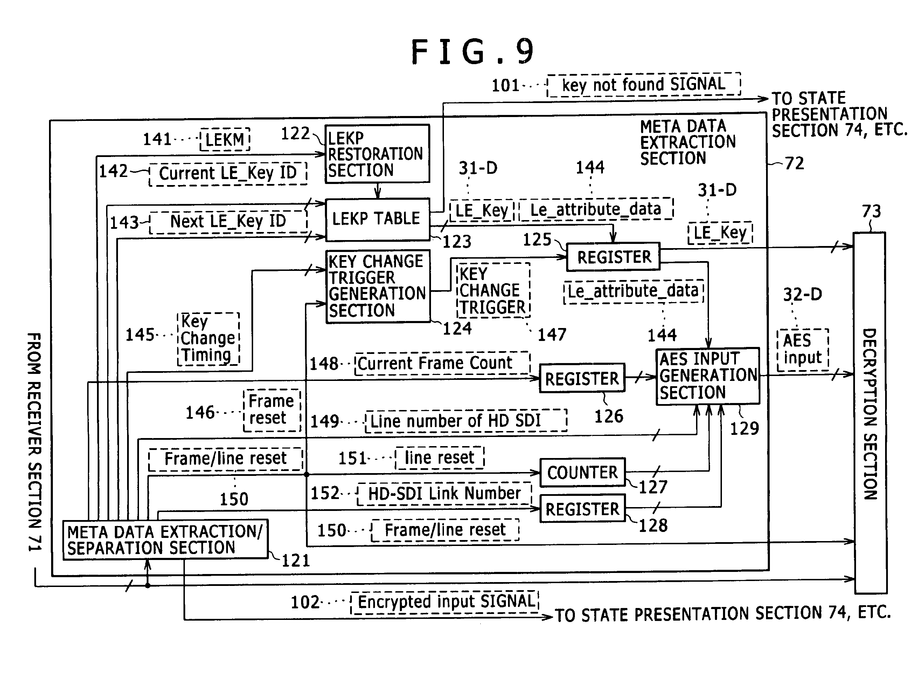

The common key is transmitted to the receiver device after being further encrypted by a second encryption method. The generator performs a second decryption process on the encrypted common key by a second decryption method, which is related to the second encryption method, when the encrypted common key is received by the receiver (e.g., an LEKP restoration section 122 shown in FIG. 9 performs an associated process). The generator supplies the common key to the decryptor (e.g., a register 125 shown in FIG. 9 performs an associated process) and generates the common key preparation information indicating that the common key is normally prepared (e.g., an LEKP table 123 shown in FIG. 9 performs an associated process) when the second decryption process is successfully performed before the first decryption process of the decryptor. The generator generates in the other situations the common key preparation information indicating that the common key is not normally prepared (e.g., the LEKP table 123 shown in FIG. 9 performs an associated process).

The second encryption method and the second decryption method are a public key cryptosystem (RSA encryption method hereinafter described) based on a public key and a decryption method that is associated with the public key cryptosystem and based on a private key.

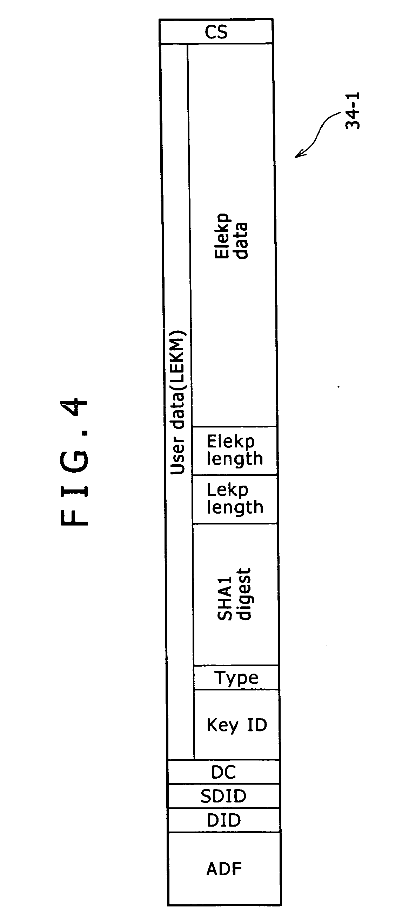

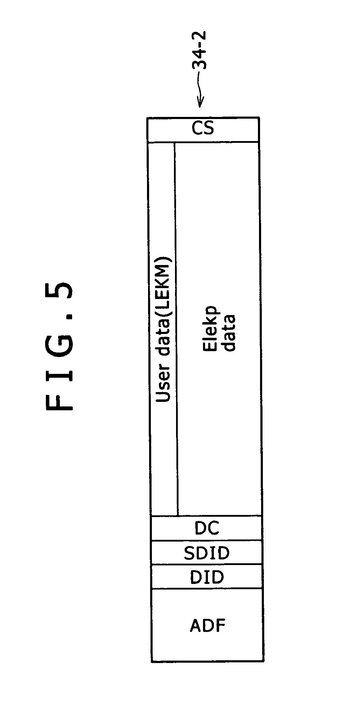

The common key encrypted with the public key is included in meta data (e.g., meta data 34 shown in FIG. 8; more specifically, meta data 34-1 shown in FIG. 4 or meta data 34-2 shown in FIG. 5, which are included as Elekp data) of the stream data that is encrypted with the common key. The meta data is superposed over the stream data, and the stream data over which the meta data is superposed is transmitted to the receiver device.

The generator generates the encryption information indicating that the stream data is encrypted, extracts the encrypted common key from the meta data, and performs the second decryption process, which uses the private key corresponding to the public key, on the common key when the meta data is superposed over the stream data received by the receiver device. The generator generates the encryption information indicating that the stream data is not encrypted when the meta data is not superposed over the stream data received by the receiver device.

The stream data uses a plurality of common keys. An identifier other than a special value (e.g., 0 in a later example) is assigned to each of the plurality of common keys. The identifier for each of the plurality of common keys is included in the meta data.

The generator prohibits the generation of the encryption information indicating that the stream data is encrypted and generates the encryption information indicating that the stream data is not encrypted (e.g., a meta data extraction/separation section 121 shown in FIG. 9 performs an associated process) when the identifier included in the meta data is the special value in a situation where the meta data is superposed over the stream data received by the receiver device.

The receiver device further includes a reproduction controller (e.g., a switching section 79 and a reproduction control section 80 shown in FIG. 8). The reproduction controller controls the reproduction of first stream data, which is obtained when the decryptor performs the first decryption process on the encrypted stream data, when the decryption controller permits the execution of the first decryption process. The reproduction controller controls the reproduction of second stream data, which is received by the receiver and not encrypted, when the decryption controller prohibits the execution of the first decryption process.

When the common key preparation information indicates that the common key is not normally prepared in a situation where the decryption controller permits the execution of the first decryption process, the reproduction controller prohibits the reproduction of the first stream data but controls the reproduction of data generated according to predefined rules (e.g., changes the input of the switching section 79 to select the switching section 78).

The data whose reproduction is controlled by the reproduction controller instead of the first stream data is image data corresponding to a predetermined stationary image (e.g., stationary image data stored in a stationary image storage section 76 shown in FIG. 8).

The data whose reproduction is controlled by the reproduction controller instead of the first stream data is image data (e.g., frame data stored in a frame storage section 77 shown in FIG. 8) corresponding to a predetermined still picture among the first stream data whose reproduction is controlled before the reproduction control of the data.

As regards the receiver device (here, it is assumed that the receiver device is projector 202, which is shown in an example in FIG. 11), the encrypted stream data (e.g., encrypted AV data transmitted from a cinema server 201 shown in FIG. 11) is transmitted to the receiver device via a first route (e.g., a route via a router 3 shown in FIG. 11). The common key (e.g., an LE key + key ID 211 shown in FIG. 11) used by the encrypted stream data is transmitted to the receiver device via a second route (e.g., a route via a network 203). The receiver includes a first receiver (e.g., an AV receiver section 231 shown in FIG. 13), which receives the unencrypted stream data or the encrypted stream data transmitted via the first route, and a second receiver (e.g., a key receiver section 232 shown in FIG. 13), which receives the common key transmitted via the second route.

The reception method/program according to an embodiment of the present invention relates to the aforementioned receiver device according to an embodiment of the present invention (e.g., the projector 4 that is shown in FIG. 1 and configured as indicated in FIG. 8). The reception method/program includes the step of determining whether the received stream data is encrypted and generating encryption information that indicates the obtained determination result (e.g., step S2 shown in FIG. 10).

Embodiments of the present invention will now be described with reference to the accompanying drawings.

FIG. 1 illustrates a typical configuration of the transmission/reception system according to an embodiment of the present invention.

The transmission/reception system shown in FIG. 1 is used to play content made of a digital material in a movie theater or the like. The reproduction content according to an embodiment of the present invention includes a movie, which is a main piece of content, and trailers and commercials, which are incidental pieces of content. Therefore, the transmission/reception system shown in FIG. 1 includes a cinema server 1, a sub AV server 2, a router 3, and a projector 4.

The word "include" is used because the system may include some additional devices. The same also holds true for the subsequent description.

In the example shown in FIG. 1, the cinema server 1 outputs the stream data for the movie, that is, the main content data, in the form, for instance, of an HD-SDI signal. In such an instance, the cinema server 1 encrypts and outputs the stream data to protect the main content by using the AES (Advanced Encryption Standard), which is one of various common key based encryption methods (hereinafter referred to as common key cryptosystems).

Meanwhile, the sub AV server 2 outputs the stream data for trailers and commercials, which are incidental content data, in the form, for instance, of an HD-SDI signal. The stream data output from the sub AV server 2 is not encrypted.

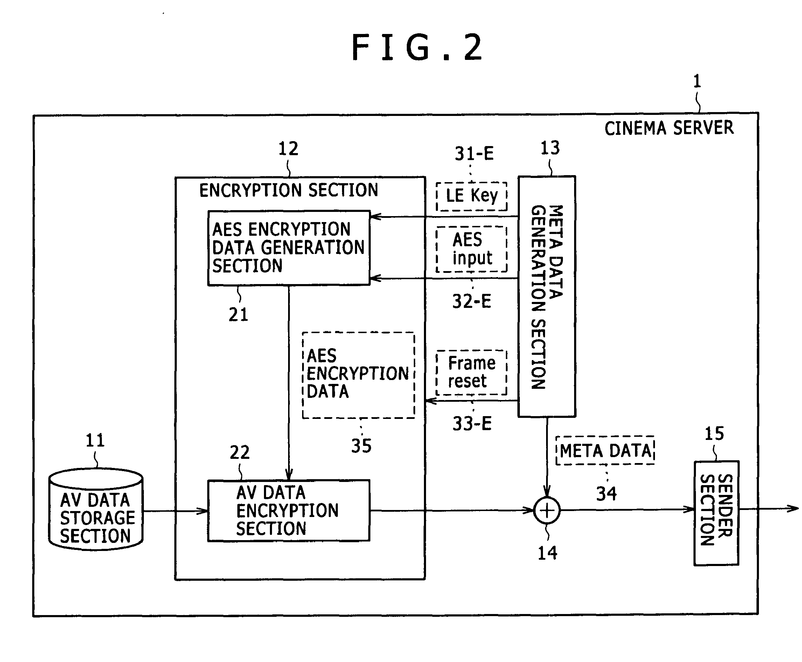

The stream data (HD-SDI output signal) output from the cinema server 1 is hereinafter referred to as the encrypted AV data. The stream data (HD-SDI output signal) output from the sub AV server 2 is hereinafter referred to as the unencrypted AV data. The stream data that is still not encrypted within the cinema server 1 (the stream data stored in an AV data storage section 11 that is shown in FIG. 2 and described later), the encrypted AV data (the stream data output from the cinema server 1), and the unencrypted AV data (the stream data output from the sub AV server 2) are collectively referred to as the AV data.

The router 3 selects either the encrypted AV data from the cinema server 1 or the unencrypted AV data from the sub AV server 2, and supplies the selected AV data to the projector 4.

The projector 4 receives the AV data from the router 3 and controls the reproduction of the content corresponding to the received AV data. More specifically, the projector 4 handles the video and audio of the movie, trailers, and commercials, projects the video on a screen or the like, and outputs the audio from loudspeakers or the like.

The cinema server 1, sub AV server 2, and projector 4 of the transmission/reception system shown in FIG. 1 will now be described in detail in the order named.

FIG. 2 illustrates a typical configuration of the cinema server 1.

In FIG. 2, solid-line squares represent blocks or component elements of a device or system (the cinema server 1 in the current example), whereas broken-line squares represent predetermined items of information. This selective use of solid lines and broken lines also apply to the other drawings referenced in the subsequent description.

In the example shown in FIG. 2, the cinema server 1 includes an AV data storage section 11, an encryption section 12, a meta data generation section 13, a superposition section 14, and a sender section 15.

The AV data storage section 11 stores one or more AV data corresponding to a movie.

In the example shown in FIG. 2, the encryption section 12 includes an AES encryption data generation section 21 and an AV data encryption section 22.

The AES encryption data generation section 21 uses an LE key 31-E (this may be referred to as the AES key), which is a common key for the AES, and an AES input 32-E to generate the data 35 (hereinafter referred to as the AES encryption data 35) for directly encrypting predetermined AV data stored in the AV data storage section 11, and supplies the generated data to the AV data encryption section 22. The AES input 32-E will be described later.

The AV data encryption section 22 encrypts a predetermined piece of data among one or more pieces of AV data stored in the AV data storage section 11 by using the AES encryption data 35, which is fed from the AES encryption data generation section 21, and supplies the resulting encrypted AV data to the superposition section 14. In this instance, the AV data encryption section 22 encrypts the AV data in the unit of a frame by using a Frame reset 33-E, which is fed from the meta data generation section 13.

For explanation purposes, it is assumed that the AV data according to an embodiment of the present invention is an HD-SID signal as mentioned above and made of one or more pieces of frame data. It is also assumed that the frame data includes data Y, which indicates the brightnesses of all pixels constituting the frame, and data Cb/Cr, which indicates the colors of all pixels constituting the frame. Further, it is assumed that the LE key 31-E and AES input 32-E are made of 128 bits.

In the above instance, the AES encryption data generation section 21, for example, generates 128-bit AES encryption data 35 from 256-bit input data, which has the 128-bit LE key 31-E and 128-bit AES input 32-E, and supplies the generated data to the AV data encryption section 22. More specifically, the AES encryption data generation section 21, for example, obtains the lowest 120 bits of the 128-bit AES encryption data 35 in 10-bit units as the data that is actually used for AV data encryption, and supplies the obtained bits to the AV data encryption section 22.

The AV data encryption section 22 uses each set of 10-bit data, converts data Y and data Cb/Cr in real time, and supplies the encrypted data to the superposition section 14 on an individual basis.

In following explanation, however, data Y and data Cb/Cr are generically referred to as AV data except when they need to be differentiated from each other.

The meta data generation section 13 generates various items of information necessary for the encryption process of the encryption section 12 (i.e., various items of information for the projector's (projector 4) decryption process, which will be described later), such as the LE key 31-E, AES input 32-E, and Frame reset 33-E. Further, the meta data generation section 13 generates data called an LEKP (Link Encryption Key Payload) by adding some of the above-mentioned various items of information to the LE key 31-E as supplementary information. Next, the meta data generation section 13 performs an encryption process on the LEKP by an encryption method that uses the public key of the projector 4 (hereinafter referred to as the public key cryptosystem), more specifically, by, for instance, the RSA (R. Rivest, A. Shamir, L. Adelman) (trademark) 2048-bit encryption method (hereinafter referred to as the RSA encryption method). The data obtained when the LEKP is encrypted by the RSA encryption method is hereinafter referred to as the ELEKP. In other words, the meta data generation section 13 generates the ELEKP. The meta data generation section 13 generates meta data 34, which includes an element (Le_attribute_data, which will be described later) of the AES input 32-E, in addition to the ELEKP, and supplies the generated meta data to the superposition section 14. Examples of meta data 34 will be described later with reference to FIGS. 4 to 6.

The superposition section 14 superposes the meta data 34, which is transmitted from the meta data generation section 13, over a predetermined portion of the encrypted AV data, which is transmitted from the AV data encryption section 22. The encrypted AV data over which the meta data 34 is superposed is supplied from the superposition section 14 to the sender section 15.

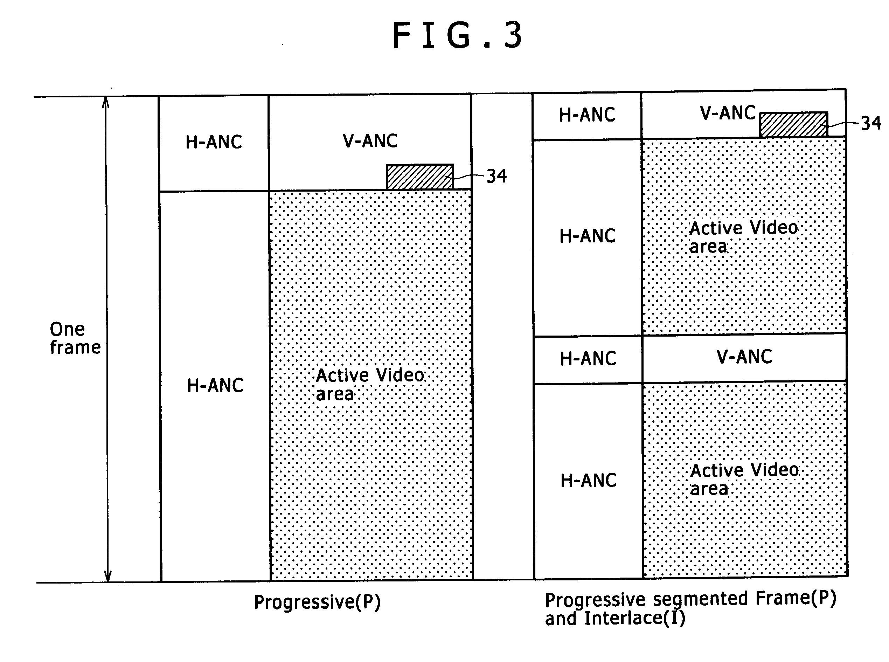

More specifically, the present embodiment superposes one meta data 34 over each frame data (one frame) constituting the encrypted AV data during its V-ANC (V-blanking period) as indicated in FIG. 3.

The left-hand half of FIG. 3 indicates insertion (superposition) position of the meta data 34 in the case of progressive (P), whereas the right-hand half indicates insertion (superposition) position of the meta data 34 in the case of progressive segmented frame (P) or interface (I). The term "H-ANC" denotes the H-blanking area. The term "active video area" denotes a so-called effective line area.

Returning to FIG. 2, the sender section 15 transmits to the router 3, which is shown in FIG. 1, the encrypted AV data, which is fed from the superposition section 14, that is, the encrypted AV data over which the meta data 34 is superposed in the unit of a frame.

The present embodiment does not use one LE key 31-E for one piece of AV data (entire stream data). An update may be performed. In other words, a plurality of LE keys 31-E are used for one piece of AV data. The reason is stated below.

If a malicious third party steals AES-encrypted content (AES-encrypted AV data for a movie in the current example) in a situation where the content is encrypted with one type of AES key (LE key 31-E in the current example), there will be an increased danger that the AES key might be directly deciphered. To solve this problem, the meta data generation section 13 according to the present embodiment periodically changes the AES key (update the AES key) for the purpose of making it difficult for third parties to directly decipher content.

In the present embodiment, the cinema server 1 protects the LE key 31-E by not directly transmitting the LE key 31-E as it is. More specifically, the meta data generation section 13 generates the LEKP, which is a combination of the LE key 31-E and supplementary data, performs an RSA encryption process on the LEKP, and generates the meta data 34, which contains the resulting ELEKP, as described above. The superposition section 14 then superposes the meta data 34 over the encrypted AV data. The sender section 15 transmits the encrypted AV data over which the meta data 34 is superposed.

In other words, the cinema server 1 according to the present embodiment performs an RSA encryption process on each of a plurality of LE keys 31-E and transmits each of the plurality of RSA-encrypted LE keys 31-E (after being contained in a predetermined frame in the order of generation) to the projector 4 via router 3. Therefore, the projector 4 also performs an RSA decryption process on each of the plurality of RSA-encrypted LE keys 31-E as described later.

As described above, the present embodiment uses a plurality of LE keys 31-E, instead of only one LE key 31-E, for the AV data corresponding to a movie (an update may be performed). More specifically, the LE key 31-E used for encrypting each frame (data) constituting a piece of AV data is not limited to one. The LE key 31-E is updated to use a new LE key 31-E every certain number of frames.

In the present embodiment, therefore, the meta data generation section 13 attaches an LE key identifier (hereinafter referred to as a key ID) to each of the plurality of LE keys 31-E whenever they are generated. The key ID is also included in the meta data 34 as described later. However, a predetermined special value (the value 0 in the present embodiment) is not attached as the key ID (is excluded).

The LE key 31-E for AV data encryption needs to be generated before the AV data encryption section 22 performs an encryption process on the AV data. In other words, there is a time lag between the instant at which the encrypted AV data is generated and the instant at which the LE key 31-E for AV data encryption is generated. As a result, in the superposition section 14, the LE key 31-E included in the meta data 34 superposed over a predetermined frame (data) of the encrypted AV data (more precisely, the LE key 31-E included in the LEKP prevailing before RSA encryption) is not used when the predetermined frame (data) is encrypted, but is to be used for encrypting a frame (data) that comes after the predetermined frame.

Examples of meta data 34, which is generated by the meta data generation section 13, will be described with reference to FIGS. 4 to 6 before describing examples of the sub AV server 2 and projector 4 (FIG. 1) in detail.

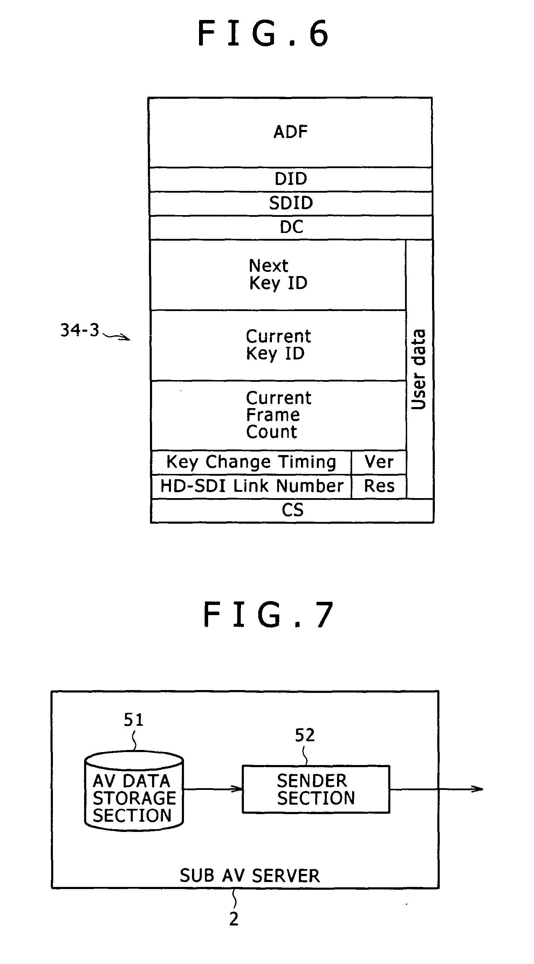

FIGS. 4 and 5 show typical structures of meta data 34-1 and 34-2, which include the aforementioned ELEKP (RSA-encrypted LE key 31-E and the like). FIG. 6 shows a typical structure of meta data 34-3, which includes an AES input 32-E.

The packet structures of meta data 34-1, 34-2, and 34-3, which are employed by the present embodiment, conform to the SMPTE (Society of Motion Picture and Television Engineers) 291M standard (Proposal SMPTE STANDARD for Television-Ancillary Data Packet and Space Formatting). They are generally referred to as meta packets 1, 2, and 3, respectively. In the packet structures defined by the SMPTE 291M standard, various items of information including an ADF (Ancillary Data Flag (000, 3FF, 3FF for component; 3FC for composite)), DID (Data ID), SDID (Secondary Data ID), DC (Data Count), User Data, and CS (Check Sum) are arranged in the order named, as indicated in FIGS. 4 to 6. Meta data 34-1, 34-2, and 34-3 have such packet structures. In the present embodiment, the user data includes the following items of information.

Within meta data 34-1, the user data includes a Key ID, Type, SHAI digest, Lekp length, Elekp length, and Elekp data. The user data within meta data 34-2 includes Elekp data.

Explanations will now be given in random order. As described earlier, the Elekp data is the ELEKP, that is, the data obtained when an RSA encryption process is performed on the LEKP, which includes the LE key 31-E and the like. The Key ID is an identifier for the LE key 31-E that is encrypted and included in the ELEKP as described earlier. The Elekp length is the data length of the ELEKP. The Lekp length is the data length of the LEKP that corresponds to the ELEKP.

The Type is an encryption method (algorithm type) that was used for LEKP encryption. In the present embodiment, the value 0, which represents the RSA encryption method, is substituted as the Type. The SHAI digest is an identifier for the public key that was used when the ELEKP was generated (when the LEKP was RSA-encrypted).

The user data in meta data 34-1 and meta data 34-2, which include the various items of information described above, is hereinafter referred to as the LEKM (Link Encryption Key Message).

Unlike the above LEKM (user data in meta data 34-1 and meta data 34-2), the user data in meta data 34-3 includes a Next Key ID, Current Key ID, Current Frame Count, Key Changing Timing, and HD-SDI Link Number.

A frame into which the target meta data 34-3 is inserted, more precisely, the AV data frame data into which meta data 34-3 is inserted, is referred to as the relevant frame. Further, the LE key 32-E prevailing, for instance, immediately before the start of the encryption of the relevant frame is referred to as the current LE key 32-E. The LE key 32-E that is to be generated next to the current LE key 32-E (to be generated by the meta data generation section 13 at the next update time) is referred to as the next LE key 32-E. The LE key 32-E that was generated immediately before the current LE key 32-E (generated by the meta data generation section 13 at the preceding update time) is referred to as the previous LE key 32-E.

The Next Key ID, Current Key ID, Current Frame Count, Key Changing Timing, and HD-SDI Link Number in the meta data 34-3 inserted into the relevant frame are the information described below.

The Next Key ID is the key ID of the next LE Key 32-E. The Current Key ID is the key ID of the current LE key 32-E.

The Current Frame Count is a value indicating what number frame is the relevant frame when counting is performed from the frame (frame No. 0) prevailing when the previous LE key 32-E is updated to the current LE key 32-E (this time is hereinafter referred to as the Key Changing Timing).

As the Key Changing Timing, 2'b11, 2'b10, 2'b01, or 2'b00 is substituted. These values indicate what frame the next Key Changing Timing represents. For example, the value 2'b11 (= 3) indicates that the Key Changing Timing represents the third or subsequent frame from the relevant frame. The value 2'b10 (= 2) indicates that the Key Changing Timing represents the second frame from the relevant frame. The value 2'b01 (= 1) indicates that the Key Changing Timing represents the first frame from the relevant frame (that is, the next frame). The value 2'b00 (= 0) indicates that the Key Changing Timing represents the relevant frame.

The HD-SDI Link Number is a value indicating the style of HD-SDI signal transmission between the cinema server 1 and projector 4 (the encrypted AV data transmission style in the present embodiment). When, for instance, the value 0 is substituted as the HD-SDI Link Number, it indicates Link-A, which is a single link (the transmission style based on one HD-SDI interface) or dual link (the transmission style based on two HD-SDI interfaces). When, for instance, the value 1 is substituted as the HD-SDI Link Number, it indicates Link-B, which is a dual link.

The LE key 31-E that is included in the ELEKP for the meta data 34-1, 34-2 inserted into the relevant frame (more precisely, included in the unencrypted LEKP) is used to encrypt a frame that is positioned after the relevant frame. In other words, the LE key 31-E used for the relevant frame is included in the ELEKP for the meta data 34-1, 34-2 inserted into a frame preceding the relevant frame (more precisely, included in the unencrypted LEKP).

In the present embodiment, the encrypted AV data over which meta data 34-1 to 34-3 are superposed is generated by the cinema server 1 (FIGS. 1 and 2) and may be transmitted to the projector 4 via the router 3 as described above.

The sub AV server 2, which is shown in FIG. 1, will now be described in detail with reference to FIG. 7.

FIG. 7 illustrates a typical configuration of the sub AV server 2. In the example shown in FIG. 7, the sub AV server 2 includes an AV data storage section 51 and a sender section 52.

The AV data storage section 51 stores one or more pieces of AV data corresponding to movie trailers and commercials .

The sender section 52 transmits to the router 3, which is shown in FIG. 1, one piece of unencrypted AV data, that is, a predetermined one of one or more pieces of AV data stored in the AV data storage section 51.

The projector 4, which is shown in FIG. 1, will now be described in detail with reference to FIGS. 8 to 10.

FIG. 8 illustrates a typical configuration of the projector 4. In the example shown in FIG. 8, the projector 4 includes a receiver section 71, a meta data extraction section 72, a decryption section 73, a state presentation section 74, switching sections 75, 78, 79, a stationary image storage section 76, a frame storage section 77, and a reproduction control section 80.

The receiver section 71 receives AV data from the router 3 (FIG. 1). More specifically, the receiver section 71 receives encrypted AV data from the cinema server 1 (FIGS. 1 and 2) or unencrypted AV data from the sub AV server 2 (FIGS. 1 and 7).

The meta data extraction section 72 determines whether the AV data received by the receiver section 71 is encrypted or unencrypted.

When the obtained determination result indicates that the AV data is encrypted, the meta data extraction section 72 generates an encryption detection signal 102 (hereinafter referred to as the Encrypted input signal 102 in accordance with FIG. 8) and supplies it to the state presentation section 74 and switching section 75.

Further, the meta data extraction section 72 extracts the meta data 34 (meta data 34-1 to 34-3 in the present embodiment) and other information from the encrypted AV data. The meta data extraction section 72 then generates an LE key 31-D, AES input 32-D, and Frame reset 33-D from the extracted information, and supplies them to the decryption section 73. The LE key 31-D, AES input 32-D, and Frame reset 33-D are restored respectively from the LE key 31-E, AES input 32-E, and Frame reset 33-E that were used when the cinema server 1 generated encrypted AV data. Therefore, it can be understood that the meta data extraction section 72 restores the LE key 31-E, AES input 32-E, and Frame reset 33-E and supplies them to the decryption section 73.

If, for some reason, the LE key 31-D is not normally generated (the LE key 31-E is not restored), that is, if the LE key 31-D, which is a decryption key, is not registered (not supplied) for the decryption section 73, which is described later, the meta data extraction section 72 generates a decryption key unregistered signal 101 (hereinafter referred to as the Key not found signal 101 in accordance with FIG. 8) and supplies it to the state presentation section 74, frame storage section 77, and switching section 79.

When, on the other hand, unencrypted AV data is received by the receiver section 71, the unencrypted AV data does not include meta data 34 so that the meta data extraction section 72 may not be able to extract the meta data 34. When the meta data 34 is not superposed over the AV data received by the receiver section 71, the meta data extraction section 72 determines that the AV data is not encrypted, and prohibits the generation of the Encrypted input signal 102.

When predefined conditions are met in a situation where AV data over which the meta data 34 is superposed is received by the receiver section 71, the AV data may be regarded as unencrypted AV data to prohibit the generation of the Encrypted input signal 102. The above-mentioned predefined conditions will be described later.

It may be assumed that the level of the Key not found signal 101 is either Hi (1) or Lo (0). The Hi level ("1" level) may be regarded as the generation of the Key not found signal 101. The Lo level ("0" level) may be regarded as the prohibition of Key not found signal 101 generation. When the LE key 31-D is normally generated (the LE key 31-E is restored) in this instance, the level of the Key not found signal 101 is Lo (0). When the LE key 31-D is not normally generated (the LE key 31-E is not restored), the level of the Key not found signal 101 is Hi (1).

Similarly, it may also be assumed that the level of the Encrypted input signal 102 is either Hi (1) or Lo (0). The Hi level ("1" level) may be regarded as the generation of the Encrypted input signal 102. The Lo level ("0" level) may be regarded as the prohibition of Encrypted input signal 102 generation. When encrypted AV data is received by the receiver section 71 in this instance, the level of the Encrypted input signal 102 is Hi (1). When, unencrypted AV data is received by the receiver section 71, the level of the Encrypted input signal 102 is Lo (0).

The following explanation assumes that the levels of the Key not found signal 101 and Encrypted input signal 102 are either Hi (1) or Lo (0).

The meta data extraction section 72 has been outlined above. The meta data extraction section 72 will be described in detail with reference to FIG. 9.

In the example shown in FIG. 8, the decryption section 73 includes an AES decryption data generation section 91 and an AV data decryption section 92.

The AES decryption data generation section 91 uses the LE key 31-D and AES input 32-D, which are supplied from the meta data extraction section 72, to generate the data 103 for directly decrypting encrypted AV data (hereinafter referred to as the AES decryption data 103), and supplies it to the AV data decryption section 92. In other words, the AES decryption data 103 is the decryption data corresponding to the AES encryption data 35, which is shown in FIG. 2.

The AV data decryption section 92 performs a decryption process on the encrypted AV data received by the receiver section 71 by using the AES decryption data 103 supplied from the AES decryption data generation section 91, and supplies the resulting AV data (hereinafter referred to as the restored AV data in order to distinguish it from unencrypted AV data) to the switching section 75. In this instance, the AV data decryption section 92 decrypts the encrypted AV data in the unit of a frame by using the Frame reset 33-D supplied from the meta data extraction section 72.

It should be pointed out in this connection that the same AES decryption data 103 is not used for the whole encrypted AV data, which is stream data. As described earlier, the LE keys 31-D corresponding to a plurality of LE keys 31-E, which are updated by the cinema server 1 at predetermined intervals, are used, that is, a plurality of LE keys 31-D that are updated at predetermined intervals are used to generate a plurality of AES decryption data 103. Further, the plurality of AES decryption data 103 are used respectively for the associated portions of the encrypted AV data (the associated frames).

The state presentation section 74 identifies the current state of the projector 4 depending on whether the Key not found signal 101 and Encrypted input signal 102 are supplied (generated) from the meta data extraction section 72, and presents the obtained identification result to the user of the projector 4 (e.g., the person who reproduces the movie).

In the present embodiment, the following first to third states are defined as the current state of the projector 4.

The first state is a state where encrypted AV data is received and normally decrypted (hereinafter referred to as the encrypted input normal state). When the Key not found signal 101 is not supplied (Lo level) and the Encrypted input signal 102 is supplied (Hi level), the current state of the projector 4 is identified as the encrypted input normal state.

The second state is a state where encrypted AV data is received but erroneously decrypted (hereinafter referred to as the encrypted input error state). When the Key not found signal 101 is supplied (Hi level) and the Encrypted input signal 102 is supplied (Hi level), the current state of the projector 4 is identified as the encrypted input error state.

The third state is a state where unencrypted AV data is received (hereinafter referred to as the unencrypted input state). When the Encrypted input signal 102 is not supplied (Lo level), the current state of the projector 4 is identified as the unencrypted input state.

The presentation method used by the state presentation section 74 is not particularly limited. For example, it may display an image or generate an audio output. However, the present embodiment assumes that the state presentation section 74 has a lamp that illuminates in two different colors, more specifically, a lamp that illuminates, for instance, in red and in green, and uses the following presentation method. In the present embodiment, the lamp illuminates in green in the encrypted input normal state, illuminates in red in the encrypted input error state, and becomes extinguished (turns off) in the unencrypted input state. This enables the user of the projector 4 (e.g., the person who reproduces the movie) to monitor three different states easily in real time.

The switching section 75 switches its input depending on whether the Encrypted input signal 102 is supplied from the meta data extraction section 72 (depending on whether the level is Hi or Lo).

More specifically, when the Encrypted input signal 102 is supplied from the meta data extraction section 72 (when the level is Hi), it means that encrypted AV data is received by the receiver section 71 (the encrypted input normal state or encrypted input error state prevails). In such a situation, the switching section 75 switches to the input from the AV data decryption section 92. The restored AV data, which is obtained when the encrypted AV data is decrypted by the AV data decryption section 92, is then input to the switching section 75 and supplied to the frame storage section 77 and switching section 79 (however, if the encrypted input error state prevails, noise data is obtained instead of the restored AV data).

On the other hand, when the Encrypted input signal 102 is not supplied from the meta data extraction section 72 (when the level is Lo), it means that unencrypted AV data is received by the receiver section 71 (the unencrypted input state prevails). In such a situation, the switching section 75 switches to the input from the receiver section 71. The unencrypted AV data is then input to the switching section 75 and supplied to the frame storage section 77 and switching section 79.

As described above, it can be understood that the switching section 75 is capable of inhibiting the decryption section 73 from performing a decryption process (prohibiting the execution of the decryption process) when unencrypted AV data is received by the receiver section 71.

In the encrypted input error state, noise data is output from the AV data decryption section 92 as described above. If the noise data is used for reproduction purposes, an awful image (noise image) appears on the screen or the like. Therefore, the present embodiment projects an alternative image onto the screen or the like in the encrypted input error state. The alternative image (hereinafter referred to as the stationary image) is a predetermined pattern image or an image containing the message "Wait for a while."

The image data for the stationary image (hereinafter referred to as the stationary image data) is stored in the stationary image storage section 76.

In the present embodiment, a predetermined still picture, which is a frame for the movie, trailer, or commercial that was just reproduced, may be adopted as the alternative image that is to be projected onto the screen or the like in the encrypted input error state.

The frame data for such a frame is stored in the frame storage section 77. In other words, the frame storage section 77 stores the last-supplied frame data, which is among the AV data supplied from the switching section 75.

In the encrypted input error state, however, the encrypted data is not normally restored and turns out to be noise data as described above. Further, the resulting noise data is supplied to the frame storage section 77. As described above, the frame storage section 77 exists for the purpose of storing predetermined frame data (still picture data) as the alternative image to be projected onto the screen or the like instead of noise data in the encrypted input error state. If the frame storage section 77 stores the noise data, it fails to achieve its purpose.

As such being the case, the frame storage section 77 checks whether the Key not found signal 101 is supplied (the level is Hi or Lo). When the Key not found signal 101 is supplied (the level is Hi), the frame storage section 77 determines that noise data is supplied from the switching section 75, and prohibits the storage of such data. As a result, the frame storage section 77 continuously stores normal frame data (normal still picture data), which is supplied immediately before a first point of time at which the Key not found signal 101 is supplied, during the time interval between the first point of time (at which the level changes from Lo to Hi) and a second point of time at which the Key not found signal 101 is no longer supplied (at which the level changes back to Lo from Hi).

In accordance with the operation performed by the user of the projector 4 (e.g., the person who reproduces the movie) (the operating control section is not shown), the switching section 78 switches to the input from either the stationary image storage section 76 or frame storage section 77.

When the switching section 78 switches to the input from the stationary image storage section 76, the stationary image data is input to the switching section 78 and supplied to the switching section 79. When, on the other hand, the switching section 78 switches to the input from the frame storage section 77, the frame data is input to the switching section 78 and supplied to the switching section 79.

The switching section 79 changes its input depending on whether the Key not found signal 101 is supplied from the meta data extraction section 72 (whether the level is Hi or Lo).

More specifically, when the Key not found signal 101 is not supplied from the meta data extraction section 72 (the level is Lo), it means that the encrypted input normal state or unencrypted input state prevails. In such a situation, the switching section 79 switches to the input from the switching section 75. The restored AV data for the movie or the unencrypted AV data for the trailers and commercials is then input to the switching section 79 and supplied to the reproduction control section 80.

When, on the other hand, the Key not found signal 101 is supplied from the meta data extraction section 72 (the level is Hi), it means that the encrypted input error state prevails, that is, noise data is output from the switching section 75. In such a situation, the switching section 79 switches to the input from the switching section 78. The stationary image data or frame data (the data corresponding to a frame for the movie, trailer, or commercial image) is then input to the switching section 79 and supplied to the reproduction control section 80.

The reproduction control section 80 controls the reproduction of the content that corresponds to the content data supplied from the switching section 79.

In the present embodiment, the content data and content are as described below.

When the switching section 79 has switched to the input from the switching section 75, that is, when the encrypted input normal state or unencrypted input state prevails, the content data denotes AV data, whereas the content denotes the movie, trailer, or commercial corresponding to the AV data. In the above instance, therefore, the reproduction control section 80 projects the video corresponding to the AV data, that is, the video of the movie, trailer, or commercial onto the screen or the like, and causes the loudspeaker to output the audio corresponding to the AV data, that is, the audio of the movie, trailer, or commercial. More precisely, while the encrypted input normal state prevails, the reproduction control section 80 projects the video of the movie onto the screen or the like and causes the loudspeaker or the like to output the audio of the movie. While the unencrypted input state prevails, the reproduction control section 80 projects the video of a movie trailer or commercial onto the screen or the like and causes the loudspeaker or the like to output the related audio.

When, on the other hand, the switching section 79 has switched to the input from the switching section 78, that is, when the encrypted input error state prevails, the content data denotes the stationary image data stored in the stationary image storage section 76 or the frame data stored in the frame storage section 77. The content denotes a stationary image (a predetermined pattern image or an image containing the message "Wait for a while") corresponding to the stationary image data or a frame (a frame for the movie, trailer, or commercial image) corresponding to the frame data. In this instance, therefore, the reproduction control section 80 exercises control so that a predetermined pattern image or an image containing the message "Wait for a while" is projected onto the screen or the like or that a frame for the movie, trailer, or commercial image is continuously projected onto the screen or the like (a frozen image is projected).

As described above, when the encrypted input error state prevails, the switching section 79 is capable of projecting an alternative image onto the screen or the like until the error vanishes (until the encrypted input normal state prevails) while refraining from reproducing noise data.

Further, the switching section 78 is capable of allowing the user of the projector 4 (e.g., the person who reproduces the movie) to freely select a stationary image or the last frame (frozen image) of the video projected onto the screen or the like as the alternative image.

The meta data extraction section 72, which is shown in FIG. 8, will now be described in detail with reference to FIG. 9. FIG. 9 shows the details of a typical configuration of the meta data extraction section 72.

In the example shown in FIG. 9, the meta data extraction section 72 includes a meta data extraction/separation section 121, an LEKP restoration section 122, an LEKP table 123, a key change trigger generation section 124, registers 125, 126, 128, a counter 127, and an AES input generation section 129.

The meta data extraction/separation section 121 determines whether the meta data 34 is superposed over a predetermined portion (see FIG. 3) of the AV data supplied from the receiver section 71.

If the obtained determination result indicates that the meta data 34 is not superposed, the meta data extraction/separation section 121 concludes that unencrypted AV data is received from the receiver section 71, prohibits the generation of the Encrypted input signal 102 (invokes a Lo level), and inhibits the meta data extraction section 72 from performing a process.

If, on the other hand, the obtained determination result indicates that the meta data 34 is superposed, the meta data extraction/separation section 121 extracts the meta data 34 and other information from the relevant frame, which is among various frames (data) that constitute the AV data.

Next, the meta data extraction/separation section 121 confirms the Current Key ID value written in meta data 34-3, which is a part of the meta data 34 including meta data 34-1 to 34-3 (see FIGS. 4 to 6).

If the written Current Key ID value is a special value (e.g., 0), the meta data extraction/separation section 121 concludes that unencrypted AV data is received from the receiver section 71, prohibits the generation of the Encrypted input signal 102 (invokes a Lo level), and inhibits the meta data extraction section 72 from performing a process.

If, on the other hand, the written Current Key ID value is a value other than the special value (e.g., 0), the meta data extraction/separation section 121 concludes that encrypted AV data is received from the receiver section 71, generates the Encrypted input signal 102 (invokes a Hi level), and supplies the generated signal to the state presentation section 74 and switching section 75 (FIG. 8). Further, the meta data extraction/separation section 121 separates various items of information that constitute the meta data 34, and supplies them to the associated blocks.

In the example shown in FIG. 9, the meta data extraction/separation section 121 extracts or separates an LEKM 141, Current LE_Key ID 142, Next LE_Key ID 143, Key Change Timing 145, Current Frame Count 148, Frame/line reset 150, and HD-SDI Link Number 152.

The Frame/line reset 150 includes a Frame reset 146 and a line reset 151. As described earlier, the LEKM 141 is a written user data value for meta data 34-1 and 34-2. The Current LE_Key ID 142 is a written Current Key ID value for meta data 34-3. The Next LE_Key ID 143 is a written Next Key ID value for meta data 34-3. The Key Change Timing 145 is a written Key Change Timing value for meta data 34-3. The HD-SDI Link Number 152 is a written HD-SDI Link Number value for meta data 34-3. The Current Frame Count 148 is a written Current Frame Count value for meta data 34-3.

The LEKM 141 is supplied to the LEKP restoration section 122. The Current LE_Key ID 142 and Next LE_Key ID 143 are supplied to the LEKP table 123. The Key Change Timing 145 is supplied to the key change trigger generation section 124. The Current Frame Count 148 is supplied to the register 126. The Frame reset 146 is supplied to the key change trigger generation section 124. The line reset 151 is supplied to the counter 127. The Frame/line reset 150, which includes the Frame reset 146 and line reset 151, is supplied to the decryption section 73 as the Frame reset 33-D, which is shown in FIG. 8. The HD-SDI Link Number 152 is supplied to the register 128.

The LEKP restoration section 122 restores the LEKP from the LEKM 141, and stores the association between the LEKP and its Key ID and the like in the LEKP table 123. In other words, the LEKM 141 is a written user data value for meta data 34-1, which is shown in FIG. 4, and meta data 34-2, which is shown in FIG. 5, as mentioned earlier. The user data includes the ELEKP (which is designated "Elekp data" in FIGS. 4 and 5). As mentioned earlier, the ELEKP is the data obtained when an RSA encryption process is performed on the LEKP. Therefore, the LEKP restoration section 122 performs a decryption process on the ELEKP included in the LEKM 141 by using a pair key (private key) for the public key for ELEKP generation, and stores the association between the resulting LEKP (decrypted LEKP) and its Key ID and the like in the LEKP table 123.

As described above, the LEKP table 123 stores the associations between one or more LEKPs and LEKP identification Key IDs and the like. Each LEKP stored in the LEKP table 123 includes the LE key 31-D (restored LE key 31-E shown in FIG. 2) and some pieces of supplementary information. The present embodiment assumes that the supplementary information includes Le_attribute_data 144, which is an element of the AES input 32-E, which is shown in FIG. 2. When the register 125 issues a request (with predetermined timing after the issuance of a key change instruction, which will be described later), the LEKP table 123 causes the register 125 to store the LE Key 31-D (hereinafter referred to as the Current LE Key 31-D) included in the LEKP having the same Key ID as the Current LE_Key ID 142 and the Le_attribute_data 144 (hereinafter referred to as the Current Le_attribute_data 144).

The LE Key 31-D included in the LEKP that has the same Key ID as the Next LE_Key ID 143 is hereafter referred to as the Next LE Key 31-D. The Le_attribute_data 144 is hereinafter referred to as the Next Le_attribute_data 144.

When the LEKP having the same Key ID as the Current LE_Key ID 142 does not exist, that is, when the Current LE Key 31-D does not exist, the LEKP table 123 concludes that the Current LE Key 31-D is not normally generated by the LEKP restoration section 122 (the associated LE Key 31-E is not restored), that is, the decryption key is not registered, generates the Key not found signal 101 (invokes a Hi level), and supplies the generated signal to the state presentation section 74, frame storage section 77, and switching section 79 (FIG. 8) .

When, on the other hand, the LEKP having the same Key ID as the Current LE_Key ID 142 exists, that is, when the Current LE Key 31-D exists, the LEKP table 123 concludes that the Current LE Key 31-D is normally generated by the LEKP restoration section 122 (the associated LE Key 31-E is restored), that is, the decryption key is registered, and prohibits the generation of the Key not found signal 101 (invokes a Lo level).

Each time the Frame reset 146 is supplied, the key change trigger generation section 124 supplies the key change trigger 147 to the register 125. More specifically, a key change instruction and a key change prohibition instruction exist as the key change trigger 147, and either of these instructions is supplied to the register 125. The key change trigger generation section 124 monitors the value of the Key Change Timing 145. When the monitored value is 2'b00 (= 0), that is, when the relevant frame serves as the Key Change Timing, the key change trigger generation section 124 supplies the key change instruction to the register 125 as the key change trigger 147. When the monitored value is other than 2'b00 (= 0), the key change trigger generation section 124 supplies the key change prohibition instruction to the register 125 as the key change trigger 147.

The register 125 stores the Current LE Key 31-D and Current Le_attribute_data 144.

As far as the key change prohibition instruction is supplied as the key change trigger 125, the register 125 supplies the Current LE Key 31-D to the decryption section 73 and the Current Le_attribute_data 144 to the AES input generation section 129. The decryption section 73 then uses the Current LE Key 31-D to decrypt the relevant frame (AES-encrypted frame data).

When, on the other hand, the key change instruction is supplied as the key change trigger 147, the register 125 requests the LEKP table 123 to update the stored contents.

The LEKP table 123 then causes the register 125 to store the Current LE Key 31-D (Next LE Key 31-D as viewed from the LE Key 31-D, which is stored in the register 125 as the Current LE Key 31-D) and Current Le_attribute_data 144 (Next Le_attribute_data 144 as viewed from the Le_attribute_data 144, which is stored in the register 125 as the Current Le_attribute_data 144) that prevail when the request is issued by the register 125.

In other words, when viewed from the Current LE Key 31-D and Current Le_attribute_data 144 prevailing before a key change, the Next LE Key 31-D and Next Le_attribute_data 144 are stored in the register 125 as the new Current LE Key 31-D and new Current Le_attribute_data 144 prevailing after the key change.

Next, the new Current LE Key 31-D (which has been the Next LE Key 31-D) is supplied to the decryption section 73, and the new Current Le_attribute_data 144 (which has been the Next Le_attribute_data 144) is supplied to the AES input generation section 129.

In the decryption section 73, therefore, the LE Key 31-D for decryption is updated from the Current LE Key 31-D to the Next LE Key 31-D (new Current LE Key 31-D) so as to decrypt the relevant frame (AES-encrypted frame data).

The register 126 may keep the Current Frame Count 148 and may supply it to the AES input generation section 129.

The counter 127 increments its count by one each time the line reset 151 is supplied, and supplies the resulting count to the AES input generation section 129.

The register 128 keep the HD-SDI Link Number 152 and supply it to the AES input generation section 129.

As described above, the AES input generation section 129 inputs the Le_attribute_data 144 from the register 125, the Current Frame Count 148 from the register 126, the Line Number of HD SDI 149 from the meta data extraction/separation section 121, the count reached by the counter 127, and the HD-SDI Link Number 152 from the register 128. The AES input generation section 129 then generates the AES input 32-D (by restoring the AES input 32-E shown in FIG. 2), which includes at least the Le_attribute_data 144, the Current Frame Count 148, the Line Number of HD SDI 149, the count reached by the counter 127, and the HD-SDI Link Number 152, and supplies the generated AES input 32-D to the decryption section 73.

A typical configuration of the transmission/reception system shown in FIG. 1 has been described with reference to FIGS. 1 to 9. The operation performed by the transmission/reception system will now be described.

The cinema server 1 encrypts the AV data for a movie and transmits it to the router 3.

The present embodiment employs the AES encryption method, which performs encryption and decryption processes at a high speed, as the method for encrypting the AV data for a movie. The cinema server 1 is configured as indicated in FIG. 2.

To generate the AES encryption data 35, which is a code for AES encryption, the meta data generation section 13 shown in FIG. 2 sequentially generates different LE Keys 31-E at predetermined update intervals.

The AES encryption data generation section 21 uses the sequentially generated LE Keys 31-E and the associated AES input 32-E to sequentially generate a plurality of AES encryption data 35. In other words, the AES encryption data generation section 21 sequentially updates the AES encryption data 35.

The AV data encryption section 22 performs an AES encryption process on the AV data supplied from the AV data storage section 11 on an individual frame basis by using each of the sequentially updated AES encryption data 35. The resulting encrypted AV data is supplied from the AV data encryption section 22 to the superposition section 14.

The sequentially updated LE Keys 31-E are combined with some supplementary data (Le_attribute_data 144, etc.) to produce the LEKP. The meta data generation section 13 performs an encryption process on the LEKP by the RSA encryption method, which is a public key cryptosystem. The ELEKP is obtained as a result of the encryption process. The meta data 34 containing the ELEKP, more specifically, meta data 34-1 to 34-3 (FIGS. 4 to 6) in the present embodiment, is generated for each frame by the meta data generation section 13 and supplied to the superposition section 14.

The superposition section 14 superposes the meta data 34 over all the frames (data) that constitute the encrypted AV data that is supplied from the AV data encryption section 22. The resulting encrypted AV data over which the meta data 34 are superposed on an individual frame basis, are supplied from the superposition section 14 to the sender section 15 and then transmitted to the router 3.

As described above, the cinema server 1 shown in FIG. 1 outputs the encrypted AV data for a movie and transmits it to the router 3.

Meanwhile, the sub AV server 2 outputs the unencrypted AV data for trailers and commercials and transmits it to the router 3.

The router 3 selects either the encrypted AV data, which is supplied from the cinema server 1, or the unencrypted AV data, which is supplied from the sub AV server 2. The selected AV data is supplied to the projector 4.

The projector 4 to which the selected AV data is supplied is capable of performing an operation (process) in accordance, for instance, with a flowchart in FIG. 10. FIG. 10 is a flowchart illustrating a typical process that the projector 4 performs.

FIG. 10 illustrates a process with particular reference to the relevant frame, which is one of a plurality of frames (data) that constitute the AV data. In other words, the process shown in FIG. 10 is performed independently for each of the frames (data) that constitute the AV data. More specifically, when, for instance, step S4 is performed for the first frame, step S2 may be simultaneously performed for the second frame.

Step S1 is performed to determine whether AV data (more precisely, the relevant frame; however, the term "AV data" will be used in the subsequent explanation of FIG. 10) is received by the receiver section 71 of the projector 4 shown in FIG. 8.

If the determination result obtained in step S1 indicates that the AV data is not received, processing returns to step S1, which is performed to determine whether AV data is received. In other words, the determination process in step S1 is repeatedly performed until the AV data is transmitted from the router 3 so that the projector 4 remains in a process standby state.

When the AV data is transmitted from the router 3 and received by the receiver section 71, the determination result obtained in step S1 indicates that the AV data is received. When the AV data is supplied to the meta data extraction section 72 and the like, processing proceeds to step S2.

Step S2 is performed to determine whether the AV data received by the receiver section 71 and supplied to the meta data extraction section 72 is encrypted.

When, in the present embodiment, the meta data 34 is included in the AV data and the value written as the Current Key ID (see FIG. 6) is other than a special value of 0 as described earlier, the determination result obtained in step S2 indicates that the supplied AV data is encrypted. In the other situation, the determination result obtained in step S2 indicates that the supplied AV data is unencrypted.

If the determination result obtained in step S2 indicates that the supplied AV data is unencrypted (is not encrypted), processing proceeds to step S7. The process performed in steps S7 and beyond will be described later.

If, on the other hand, the determination result obtained in step S2 indicates that the supplied AV data is encrypted, processing proceeds to step S3. In this instance, the Encrypted input signal 102 is generated (a Hi level is invoked) and supplied to the state presentation section 74, switching section 75, and the like.

Step S3 is performed to determine whether the LE Key 31-D is prepared normally by the meta data extraction section 72.

As described earlier, if, in the present embodiment, the LE_Key 31-D corresponding to the Current LE_Key ID 142 is stored in the LEKP table 123 as indicated in FIG. 9, the determination result obtained in step S3 indicates that the LE Key 31-D is prepared normally. If not, the determination result obtained in step S3 indicates that the LE Key 31-D is not prepared normally.

If the determination result obtained in step S3 indicates that the LE Key 31-D is not prepared normally, processing proceeds to step S9. The process performed in steps S9 and beyond will be described later.

If, on the other hand, the determination result obtained in step S3 indicates that the LE Key 31-D is prepared normally, processing proceeds to step S4. In this instance, the generation of the Key not found signal 101 is prohibited (a Lo level is invoked).

In step S4, the decryption section 73 performs a decryption process on the encrypted AV data that is supplied from the receiver section 71.

In the above instance, the switching section 75 has switched to the input from the decryption section 73 as described earlier because the Encrypted input signal 102 is continuously supplied to the switching section 75 and the like (the Hi level is maintained). Further, since the generation of the Key not found signal 101 is continuously prohibited (the Lo level is maintained), the switching section 79 has switched to the input from the switching section 75. Consequently, the restored AV data (the AV data for a movie), which is obtained as a result of step S4, is output from the decryption section 73 and supplied to the reproduction control section 80 via the switching sections 75, 79.

In step S5, the reproduction control section 80 reproduces the movie corresponding to the restored AV data.

Further, the Encrypted input signal 102 is continuously supplied to the state presentation section 74 (the Hi level is maintained), and the supply of the Key not found signal 101 is continuously prohibited (the Lo level is maintained). In step S6, therefore, the state presentation section 74 indicates the "encrypted input normal state" (the present embodiment causes the lamp to illuminate in green).

In reality, however, step S6 is not performed after completion of step S5. Steps S5 and S6 are performed independently and virtually simultaneously.

Returning to step S2, if the determination result obtained in step S2 indicates that the supplied AV data is unencrypted (is not encrypted), processing proceeds to step S7 as described earlier.

In the above instance, the generation of the Encrypted input signal 102 and Key not found signal 101 is prohibited (a Lo level is invoked). Therefore, the switching section 75 switches to the input from the receiver section 71, and the switching section 79 switches to the input from the switching section 75. Consequently, the unencrypted AV data received by the receiver section 71 in step S1 is supplied to the reproduction control section 80 via the switching sections 75, 79.

Thus, in step S7, the reproduction control section 80 reproduces trailers and commercials corresponding to the unencrypted AV data.

The supply of the Encrypted input signal 102 to the state presentation section 74 is continuously prohibited (the Lo level is maintained). Thus, in step S8, the state presentation section 74 indicates the "unencrypted input state" (the present embodiment extinguishes the lamp).

In reality, however, step S8 is not performed after completion of step S7. Steps S7 and S8 are performed independently and virtually simultaneously.

Returning to step S3, if the determination result obtained in step S3 indicates that the LE Key 31-D is not prepared normally, processing proceeds to step S9 as described earlier.

In the above instance, the generation of the Key not found signal 101 begins and then continues (the Hi level is maintained) as described earlier. The switching section 79 then switches to the input from the switching section 78. Therefore, the stationary image data stored in the stationary image storage section 76 or the frame data stored in the frame storage section 77 is supplied to the reproduction control section 80 via the switching sections 78, 79.

Thus, in step S9, the reproduction control section 80 reproduces the predetermined frame (still picture) or stationary image.

Both the Key not found signal 101 and Encrypted input signal 102 are continuously supplied to the state presentation section 74 (the levels of both signals are continuously Hi). Thus, in step S10, the state presentation section 74 indicates the "encrypted input error state" (the present embodiment causes the lamp to glow red).

In reality, however, step S10 is not performed after completion of step S9. Steps S9 and S10 are performed independently and virtually simultaneously.

The operation performed by the transmission/reception system shown in FIG. 1 has been described.

The present invention is applicable not only to the transmission/reception system shown in FIG. 1 but also to various other systems. In the example shown in FIG. 1 (the example shown in FIG. 2), the LE Key 31-E is included in the meta data 34, and the meta data 34 is superposed over encrypted AV data and transmitted from the cinema server 1, which is the transmitting end, to the projector 4, which is the receiving end. In other words, the LE Key 31-E is transmitted together with the encrypted AV data. However, the LE Key 31-E need not be transmitted together with the encrypted AV data. The present invention can also be applied to a transmission/reception system in which the LE Key 31-E and encrypted AV data are transmitted from the transmitting end to the receiving end through different transmission paths. A typical configuration of such a transmission/reception system is shown in FIG. 11. FIG. 11 is a block diagram illustrating a typical configuration of the transmission/reception system according to an embodiment of the present invention, which is different from the configuration shown in FIG. 1.

As regards the elements of the transmission/reception system shown in FIG. 11 that are the same as those in FIG. 1, their description is omitted as appropriate with the same reference numerals assigned.

In the example shown in FIG. 11, the transmission/reception system includes a cinema server 201, a sub AV server 2, a router 3, and a projector 202.

The comparison between the examples shown in FIGS. 1 and 11 reveals that the cinema server 1 within the example shown in FIG. 1 (the example shown in FIG. 2) handles the meta data 34 that includes the LE Key 31-E, superposes the meta data 34 over encrypted AV data, and transmits the resulting combination to the projector 4 via the router 3 as described earlier.

On the other hand, the cinema server 201 within the example shown in FIG. 11 transmits a combination of the LE Key 31-E and its Key ID (this combination is hereinafter referred to as the LE Key + Key ID 211) to the projector 202 via a predetermined network 203.

As described above, the example shown in FIG. 11 differs from the example shown in FIG. 1 in that the former transmits the LE Key 31-E and encrypted AV data through different paths. In other respects, the example shown in FIG. 11 is basically the same as the example shown in FIG. 1. Therefore, the cinema server 201 shown in FIG. 11, which transmits the LE Key 31-E, has a configuration that is slightly different from the configuration example (FIG. 2) of the cinema server 1 shown in FIG. 1. By the same token, the projector 202 shown in FIG. 11, which receives the LE Key 31-E, has a configuration that is slightly different from the configuration example (FIG. 8) of the projector 4 shown in FIG. 1.

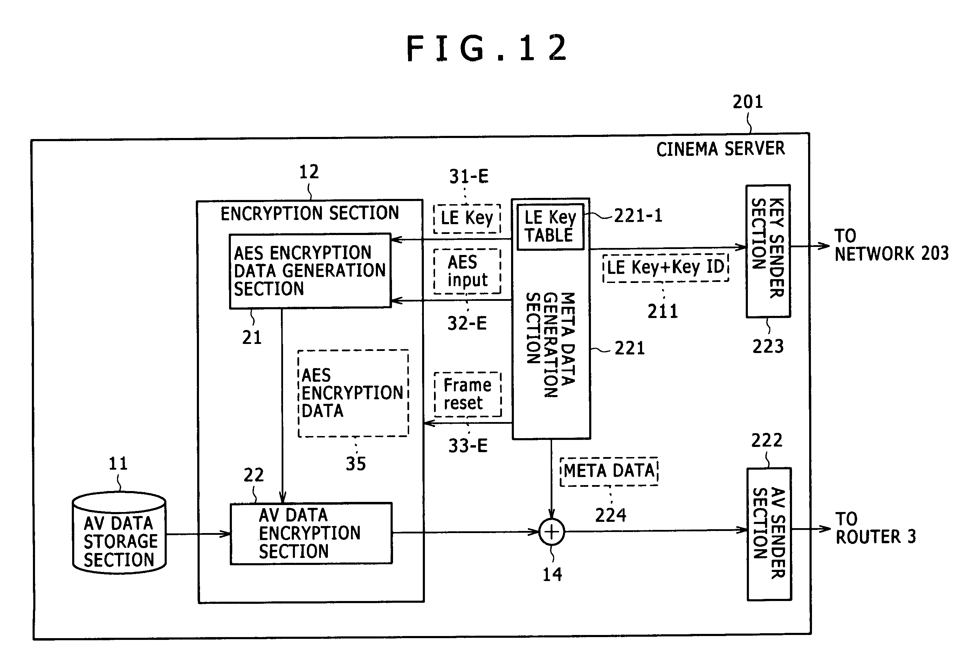

For example, the cinema server 201 and projector 202 may be configured as indicated in FIGS. 12 and 13, respectively. FIG. 12 illustrates a typical configuration of the cinema server 201. FIG. 13 illustrates a typical configuration of the projector 202.

As regards the elements of the cinema server 201 shown in FIG. 12 that are the same as those of the cinema server 1 shown in FIG. 2, their description is omitted as appropriate with the same reference numerals assigned. Similarly, as regards the elements of the projector 202 shown in FIG. 13 that are the same as those of the projector 4 shown in FIG. 8, their description is omitted as appropriate with the same reference numerals assigned.

In the example shown in FIG. 12, the cinema server 201 includes the AV data storage section 11, encryption section 12, and superposition section 14, which are the same as those of the cinema server 1 shown in FIG. 2. However, the cinema server 201 shown in FIG. 12 also includes a meta data generation section 221, an AV sender section 222, and a key sender section 223 unlike the cinema server 1 shown in FIG. 2.

The elements different from those of the cinema server 1 shown in FIG. 2, that is, only the meta data generation section 221, AV sender section 222, and key sender section 223 will be described below.

The meta data generation section 221 generates various information for the encryption process of the encryption section 12 (that is, various information for the decryption process of the projector 202), more specifically, the LE Key 31-E, AES input 32-E, Frame reset 33-3, and the like as mentioned earlier, and supply the generated information to the encryption section 12.

The process performed so far is basically the same as the process performed by the meta data generation section 13 shown in FIG. 2. However, the subsequent process is slightly different from the process performed by the meta data generation section 13 shown in FIG. 2.

More specifically, the meta data generation section 221 stores the LE Key + Key ID 211, which is a combination of the generated LE Key 31-E and its Key ID, in the built-in LE key table 221-1. Therefore, the LE key table 221-1 stores one more sets of the LE Key + Key ID 211.

The LE Key + Key ID 211 is the key information that concerns the security of the transmission/reception system. Therefore, the LE Key + Key ID 211 needs to be prevented from being stolen although it exists within the cinema server 201. Under such circumstances, the LE Key + Key ID 211 should be encrypted before being stored in the LE key table 221-1. The method of encrypting the LE Key + Key ID 211 is not particularly defined.

The number of sets of the LE Key + Key ID 211 to be prepared and stored in the LE key table 221-1 is not particularly defined. It depends on the intervals at which the LE Key 31-E is updated and on various other transmission/reception system operating policies. Any number of sets of the LE Key + Key ID 211 may be prepared and stored in the LE key table 221-1 as far as it conforms to the operating policies.

One or more sets of the LE Key + Key ID 211, which are stored in the LE key table 221-1, are individually transmitted to the key sender section 223.

Further, the meta data generation section 221 supplies the aforementioned various information (e.g., the information included in meta data 34-3, which is shown in FIG. 6) except the LE Key + Key ID 211 to the superposition section 14 as meta data 224. In this instance, the meta data 224 may be RSA-encrypted or left unencrypted because it does not include the LE Key 31-E that needs to be protected.

The process described above is slightly different from the process performed by the meta data generation section 13 shown in FIG. 2.

In the superposition section 14, the meta data is superposed over the encrypted AV data no matter whether superposition occurs in the example shown in FIG. 2 or FIG. 12. However, the meta data superposed in the example shown in FIG. 12 differs from the meta data superposed in the example shown in FIG. 2. As described earlier, the meta data 34 is superposed over the encrypted AV data in the example shown in FIG. 2. In the example shown in FIG. 12, on the other hand, the meta data 224 is superposed over the encrypted AV data.

The AV sender section 222 transmits the encrypted AV data supplied from the superposition section 14, that is, the encrypted AV data over which the meta data 224 is superposed, more specifically, the encrypted AV data that does not include the LE_Key 31-E, to the projector 202 via the router 3.

Meanwhile, the key sender section 223 transmits the LE Key + Key ID 211, which is stored in the LE key table 221-1, to the projector 202 via the network 203.

The LE Key + Key ID transmission timing for the key sender section 223 is the timing preceding the transmission of a portion of the encrypted AV data (a certain number of frame data) that is encrypted with the associated LE Key 31-E. It is acceptable as far as the decryption process is performed by the projector 202 without delay.

To prevent the LE Key + Key ID 211 (associated LE Key 31-E) from being disclosed to a third party due to network bugging or projector spoofing, the communication between the projector 202 and cinema server 201 (key sender section 223) via the network 203 can be established, for instance, by communicating the LE Key + Key ID 211 after the key sender section 223 establishes a TLS (Transport Layer Security) session (secure communication path) with the public key of the projector 202.

In the example shown in FIG. 13, the projector 202 that relates to the cinema server 201 includes an AV receiver section 231, a key receiver section 232, and a meta data extraction section 233 unlike the projector 4 shown in FIG. 8. The projector 202 also includes the decryption section 73, state presentation section 74, switching sections 75, 78, 79, stationary image storage section 76, frame storage section 77, and reproduction control section 80, which are the same as the elements of the projector 4 shown in FIG. 8.

The elements that differ from those of the projector 4 shown in FIG. 8, that is, only the AV receiver section 231, key receiver section 232, and meta data extraction section 233 will be described below.

The AV receiver section 231 receives AV data from the router 3 (FIG. 11). In other words, the AV receiver section 231 receives encrypted AV data (encrypted AV data over which the meta data 224 without the LE Key 31-E is superposed) from the cinema server 201 (FIGS. 11 and 12) or unencrypted AV data from the sub AV server 2.

Meanwhile, the key receiver section 232 receives the LE Key + Key ID 211, which is transmitted from the cinema server 201 via the network 203 (FIG. 11), and supplies it to the meta data extraction section 233.

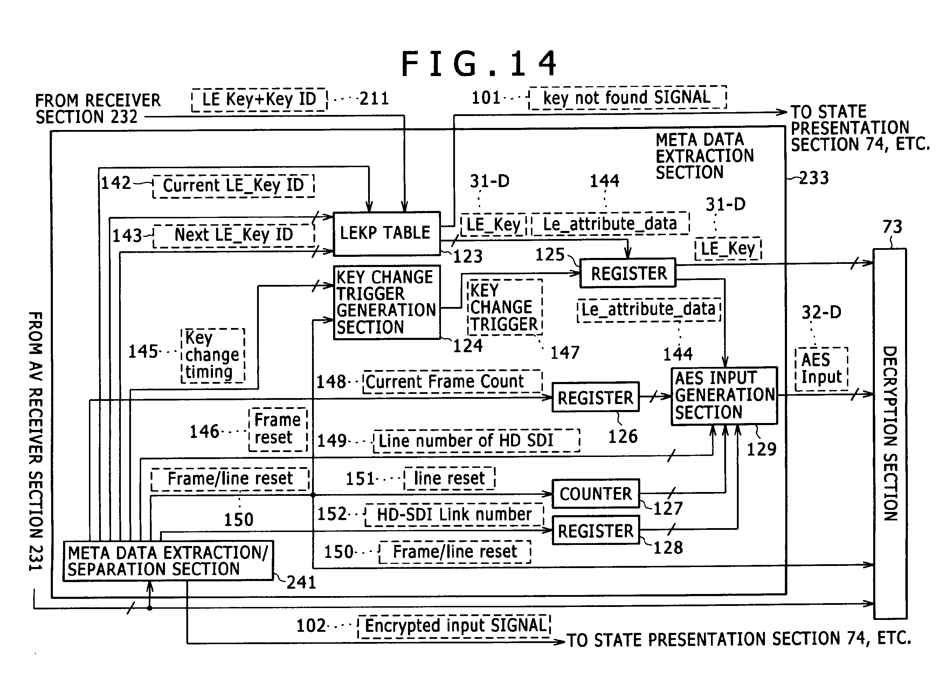

The meta data extraction section 233 can be configured as indicated, for instance, in FIG. 14. FIG. 14 is a block diagram illustrating the details of a typical configuration of the meta data extraction section 233.

As regards the elements of the meta data extraction section 233 shown in FIG. 14 that are the same as those of the meta data extraction section 72 shown in FIG. 9, their description is omitted as appropriate with the same reference numerals assigned.

In the example shown in FIG. 14, the meta data extraction section 233 includes a meta data extraction/separation section 241, an LEKP table 123, a key change trigger generation section 124, registers 125, 126, 128, a counter 127, and an AES input generation section 129.

The comparison between FIGS. 9 and 14 reveals that the meta data extraction section 72 shown in FIG. 9 includes the LEKP restoration section 122 because the LE Key 31-E (the LE Key 31-D to be generated), which is a restoration target, is included in the meta data (see FIG. 8) that is superposed over the encrypted AV data supplied from the receiver section 71.

On the other hand, the key receiver section 232 supplies the LE Key 31-E (the LE Key 31-D to be generated), which is a restoration target, to the meta data extraction section 233 shown in FIG. 14 as the LE Key + Key ID 211. Therefore, the meta data extraction section 233 shown in FIG. 14 is not provided with the LEKP restoration section 122 so that the LE Key + Key ID 211 supplied from the key receiver section 232 is directly stored in the LEKP table 123.

As described earlier, the LE Key + Key ID 211 is the key information that concerns the security of the transmission/reception system and is transmitted before the transmission of encrypted AV data. Therefore, the LE Key + Key ID 211 needs to be prevented from being stolen although it exists within the projector 202. Under such circumstances, the LE Key + Key ID 211 should be encrypted before being stored in the LEKP table 123 although the method of encrypting the LE Key + Key ID 211 is not particularly defined.

The meta data extraction/separation section 241 determines whether the meta data 224 is superposed over a predetermined portion of the AV data supplied from the AV receiver section 231 (see FIG. 3; however, replace the reference numeral 34 in FIG. 3 with the reference numeral 224).

If the obtained determination result indicates that the meta data 224 is not superposed, the meta data extraction/separation section 241 concludes that unencrypted AV data is received from the AV receiver section 231, refrains from generating the Encrypted input signal 102 (invokes a Lo level), and prohibits the meta data extraction section 233 from performing a process.

If, on the other hand, the obtained determination result indicates that the meta data 224 is superposed, the meta data extraction/separation section 241 extracts the meta data 224 and other information from the relevant frame, which is among a plurality of frames (data) constituting the AV data.

Next, the meta data extraction/separation section 241 confirms the written Current Key ID value included in the meta data 224 (the written Current Key ID value in meta data 34-3 or the value corresponding to it).

If the written Current Key ID value is a special value (e.g., 0), the meta data extraction/separation section 241 concludes that unencrypted AV data is received from the receiver section 231, refrains from generating the Encrypted input signal 102 (invokes a Lo level), and prohibits the meta data extraction section 233 from performing a process.

If, on the other hand, the written Current Key ID value is a value other than the special value (e.g., 0), the meta data extraction/separation section 241 concludes that encrypted AV data is received from the receiver section 231, generates the Encrypted input signal 102 (invokes a Hi level), and supplies the generated signal to the state presentation section 74 and switching section 75 (FIG. 13). Further, the meta data extraction/separation section 241 separates various items of information that constitute the meta data 224, and supplies them to the associated blocks.

In the example shown in FIG. 14, the meta data extraction/separation section 241 extracts or separates the Current LE_Key ID 142, Next LE_Key ID 143, Key Change Timing 145, Current Frame Count 148, Frame/line reset 150, and HD-SDI Link Number 152, and the information for generating the Le_attribute_data 144.

The Current LE_Key ID 142, Next LE_Key ID 143, and the information for generating the Le_attribute_data 144 are then supplied to the LEKP table 123. In such an instance, the Le_attribute_data 144 is generated in accordance with the information for generating the Le_attribute_data 144, combined with the mating Le Key + Key ID 211 (the associated LE_Key 31-D), and stored in the LEKP table 123. The Key Change Timing 145 is supplied to the key change trigger generation section 124. The Current Frame Count 148 is supplied to the register 126. The Frame reset 146 is supplied to the key change trigger generation section 124. The Line reset 151 is supplied to the counter 127. The Frame/line reset 150, which includes the Frame reset 146 and Line reset 151, is supplied to the decryption section 73 as the Frame reset 33-D shown in FIG. 13. The HD-SDI Link Number 152 is supplied to the register 128.

Elements of the meta data extraction section 233 shown in FIG. 14 that are not described above, that is, the LEKP table 123, key change trigger generation section 124, registers 125, 126, 128, counter 127, and AS input generation section 129, are not described here because they have basically the same functions and configurations as the counterparts shown in FIG. 9.

A typical configuration of the transmission/reception system shown in FIG. 11 has been described with reference to FIGS. 11 to 14. The operations performed by the transmission/reception system are not described here because they are basically the same as the operations described with reference to FIG. 1 except for the operations (processes) performed by the elements that differ from the counterparts shown in FIG. 1.

As described above, the projector 4 (FIG. 8) and projector 202 (FIG. 13) of the transmission/reception system shown in FIGS. 1 and 11, which are receiver devices, are capable of generating the Encrypted input signal 102. Therefore, the use of the Encrypted input signal 102 enables the receiving end to easily determine whether the digital material (the stream data for the movie, trailers, or commercials in the example described above) transmitted from the transmitting end is encrypted. As a result, a first advantage of permitting the receiving end to easily handle digital materials no matter whether they are encrypted is provided.

When unencrypted stream data is input to the projector 4 or projector 202 due to the router's switching, a process needs to be performed to skip the decryption process (the process of the decryption section 73) within the projector 4 or projector 202 in synchronism with the switching timing. The same process also needs to be performed at the time of reverse switching. When a projector in related art is used, external control needs to be exercised to perform the above process. The present embodiment, however, provides a second advantage of not having to exercise such external control because the switching section 75 (FIGS. 8 and 13) is furnished to change the input in accordance with the Encrypted input signal 102.

Since such external control may not be required, it is not necessary to furnish the transmission/reception system with a special element for exercising such external control. Further, a switch or other simple device may be used as the switching section 75. As a result, a third advantage of constructing the whole transmission/reception system with ease is provided.

The second and third advantages can be provided not only for a small-scale reproduction signal switching system (transmission/reception system), which is shown in FIGS. 1 and 11, but also for a large-scale transmission/reception system that includes a large number of servers and projectors. Particularly, the third advantage will be enhanced during the use of the latter system, that is, a large-scale transmission/reception system.

Further, the projector 4 (FIG. 8) and projector 202 (FIG. 13), which are receiver devices, can generate the Key not found signal 101, which indicates whether the common key for the decryption of encrypted stream data (encrypted AV data in the example described above) is prepared. Therefore, the use of the Key not found signal 101 (the use of the switching section 79 shown in FIGS. 8 and 13 in the example described above) makes it possible to provide a fourth advantage. More specifically, even when the common key is not prepared because the signal to be input to a different projector is erroneously input or the decryption process on an encrypted common key (LE Key 31-D in the example described above) is delayed, it is possible to prevent noise from being output to a projected image (on-screen image).

Furthermore, the projector 4 (FIG. 8) and projector 202 (FIG. 13), which are receiver devices, are provided with the state presentation section 74, which uses the Key not found signal 101 and Encrypted input signal 102. Therefore, a fifth advantage of being capable of monitoring the status of the projector 4 and projector 202 is provided. More specifically, it is possible, for instance, to check whether received stream data (AV data in the example described above) is encrypted and whether or not encrypted stream data (encrypted AV data in the example described above) is decrypted normally. The fifth advantage (the functionality provided by the fifth advantage) can be effectively used not only for monitoring regular operations but also for checking the system by manually changing the signals (stream data).

The transmission/reception system capable of providing the advantages described above, that is, the transmission/reception system according to an embodiment of the present invention, is not limited to the examples shown in FIGS. 1 and 10. The present invention is applicable to a transmission/reception system as far as it includes at least a receiver device that incorporates the functionality described below.

In other words, the transmission/reception system provides the first to third advantages as far as it is capable of determining whether the stream data received by the receiver is encrypted, and generating encryption information that indicates the obtained determination result (generating the Encrypted input signal 102 in the example described above or generating any other information that indicates the obtained determination result).

The transmission/reception system provides the fourth advantage as far as it determines whether the common key is prepared normally before a decryption process is performed on encrypted stream data, which is encrypted with the common key and received by the receiver, when the common key is to be transmitted to the receiver device. The transmission/reception system, as the fourth advantage, generates common key preparation information (Key not found signal 101 in the example described above or any other common key preparation information) that indicates the obtained determination result.

The transmission/reception system provides the fifth advantage as far as it identifies the state of the receiver device in accordance with the encryption information and common key preparation information, which are generated by the aforementioned two functions, and presents the obtained identification result.

The projector 4 and projector 202, which are capable of inputting an encrypted HD-SDI signal (encrypted AV data in the example described above), have been described as a receiver device to which the present invention is applicable. In the future, however, such an input capability may be incorporated not only in projectors but also in videotape recorders, disc recorders, switchers, monitors, and various other devices. The devices having such an input capability can serve as the receiver device according to an embodiment of present invention when they additionally incorporate various functions that provide the first to fifth advantages. When various devices are implemented as the receiver device to which the present invention is applicable, it is conceivable that the transmission/reception system will be used with increased ease.

In the example described above, the stream data transmitted by the transmission/reception system to which the present invention is applicable is encrypted by a common key cryptosystem and then transmitted from the transmitting end to the receiving end. Therefore, the common key (the LE Key 31-E or the like in the example described above) is also transmitted from the transmitting end. In this instance, the common key needs to be prevented from being stolen during its transmission because it is the key information that concerns the security of the transmission/reception system. Under such circumstances, the common key in the example described above is RSA-encrypted before being transmitted from the transmitting end to the receiving end.

The common key can also be encrypted by various encryption methods other than the RSA encryption method. However, the use of a public key cryptosystem is suitable including the example described above (the use of the RSA encryption method). The reason is that, in a system based on the use of the RSA encryption method or other public key cryptosystem, the private key (e.g., the key for decrypting the encrypted common key) is managed so that it does not leak out of the decryption side (e.g., receiver device) (the private key is presumably managed in such a manner because it should be managed in such a manner). It can therefore be that the private key is difficult to practically be stolen. It is even more difficult to steal the private key that is incorporated in an IC (Integrated Circuit) card or chip. In other words, the possibility of private key stealing can be rendered more close to 0%.

For example, ECC (Elliptic Curve Cryptography), ElGamal, Rabin, Williams, EPOC, and NTRU encryption methods exist as public key cryptosystems in addition to the aforementioned RSA encryption method. All of these public key cryptosystems can be used as a method for encrypting the common key (e.g., LE Key 31-E in the example described above).

A series of processes described above (e.g., processes illustrated in FIG. 10) can be executed by hardware and by software. When the series of processes is to be executed by software, the programs constituting the software are installed from a program storage medium onto a computer built in dedicated hardware or a general-purpose personal computer or other computer that can execute various functions when various programs are installed.

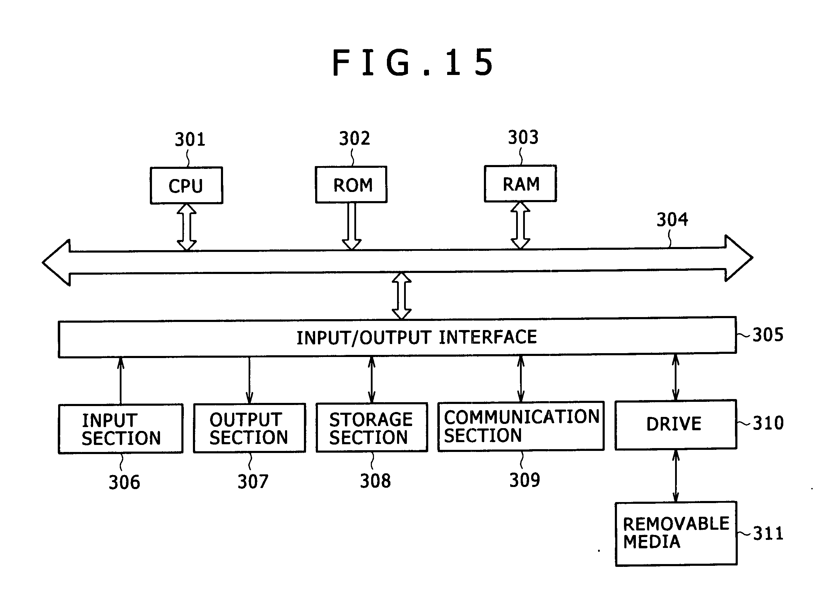

FIG. 15 is a block diagram illustrating a typical configuration of a personal computer that performs the aforementioned series of processes. When, for instance, the processes shown in FIG. 10 are to be performed by a program, a personal computer having the configuration shown in FIG. 15 may constitute the whole or a part of the projector 4 shown in FIG. 1 or the projector 202 shown in FIG. 11.

Referring to FIG. 15, a CPU (Central Processing Unit) 301 performs various processes in accordance with programs stored in a ROM (Read Only Memory) 302 or in a storage section 308. The programs and data to be executed by the CPU 301 may be stored in a RAM (Random Access Memory) 303. The CPU 301, ROM 302, and RAM 303 are interconnected via a bus 304.

The CPU 301 is connected to an input/output interface 305 via the bus 304. The input/output interface 305 is connected to an input section 306, which includes a keyboard, a mouse, a microphone, and the like, and to an output section 307, which includes a display, a projection device, a loudspeaker, and the like. The CPU 301 performs various processes in compliance with instructions input from the input section 306. The CPU 301 outputs processing results to the output section 307.

The storage section 308, which is connected to the input/output interface 305, is, for instance, a hard disk and used to store various data and the programs to be executed by the CPU 301. A communication section 309 communicates with an external device via a network such as the Internet or local area network.

Further, a program may be acquired via the communication section 309 and stored in the storage section 308.

When removable medium such as a magnetic disk, optical disk, magnetooptical disk, semiconductor memory, is inserted into a drive 310, which is connected to the input/output interface 305, the drive 310 drives the inserted medium and acquires a program or data recorded on the medium. The acquired program or data may be transferred to the storage section 308 and stored.

As indicated in FIG. 15, the program recording medium for storing programs, which are to be installed on a computer and rendered executable by the computer, is a removable medium 311, the ROM 302, or the hard disk. The removable medium 311 is a package medium, including a magnetic disk (flexible disk included), optical disk (CD-ROM [Compact Disc-Read Only Memory] and DVD [Digital Versatile Disc] included), magnetooptical disk, and semiconductor memory. The ROM 302 stores the programs temporarily or permanently. The hard disk constitutes the storage section 308. The programs may be stored on the program recording medium via the communication section 309, which is an interface for the router and modem, by using a wired or wireless communication medium such as the Internet, local area network, or digital satellite broadcast.

In this document, the steps for writing the programs to be stored on the recording medium not only include processes that are performed in a described chronological order but also include processes that are performed parallelly or individually and not necessarily in chronological order.

The term "system," which is used in this document, represents an aggregate of a plurality of devices.

It should be understood by those skilled in the art that various modifications, combinations, subcombinations, and alterations may occur depending on design requirements and other factors insofar as they are within the scope of the appended claims or the equivalents thereof.

## Claims

1. A transmission/reception system comprising:
a first sender device (1) configured to encrypt stream data by a predetermined encryption method and transmit the encrypted stream data;
a second sender device (2) configured to transmit stream data without encrypting the stream data; and
a receiver device (4) configured to receive stream data that is transmitted from the first sender device (1) or the second sender device (2);
wherein the receiver device (4) includes
a receiver (71) configured to receive the stream data that is transmitted from the first sender device (1) or the second sender device (2), and
a generator (72) configured to determine whether the stream data received by the receiver is encrypted, and generate encryption information that indicates the obtained determination result.

2. A transmission/reception method for a transmission/reception system that includes a first sender device (1) configured to encrypt stream data by a predetermined encryption method and transmit the encrypted stream data, a second sender device (2) configured to transmit unencrypted stream data, and a receiver device (4) configured to receive stream data that is transmitted from the first sender device (1) or the second sender device (2), wherein the receiver device (4) determines (S2) whether the received stream data is encrypted, and generates encryption information that indicates the obtained determination result.

3. A receiver device which receives stream data that are transmitted after being encrypted by a first encryption method or are transmitted without being encrypted, the receiver device (4) comprising:
a receiver (71) configured to receive the encrypted stream data or the unencrypted stream data; and
a generator (72) configured to determine whether the stream data received by the receiver is encrypted, and generate encryption information that indicates the obtained determination result.

4. The receiver device according to claim 3, further comprising:
a decryptor (73) configured to perform a first decryption process on encrypted stream data by a first decryption method; and
a decryption controller configured to permit the decryptor to perform the first decryption process on the stream data when the encryption information generated by the generator indicates that the stream data is encrypted, and prohibit the decryptor from performing the first decryption process on the stream data when the encryption information generated by the generator indicates that the stream data is not encrypted.

5. The receiver device according to claim 4,
wherein the first encryption method and the first decryption method are an encryption method and a decryption method that are based on a common key;
the common key used for encrypting the stream data is transmitted to the receiver device;
the receiver further receives the common key;
the generator further supplies the common key, which is received by the receiver, to the decryptor when the stream data is determined to be encrypted; and
the decryptor performs the first decryption process on the stream data by using the common key that is supplied from the generator.

6. The receiver device according to claim 5,
wherein the generator further determines before the first decryption process of the decryptor whether the common key is normally prepared, and generates common key preparation information that indicates the obtained determination result; and
the receiver device further includes a presenter that identifies the state of the receiver device in accordance with the encryption information and the common key preparation information, which are both generated by the generator, and presents the obtained identification result.

7. The receiver device according to claim 6,
wherein the presenter
identifies a first state where unencrypted stream data is received when the encryption information indicates that the stream data is not encrypted;
identifies a second state where encrypted stream data is received and the first decryption process is normally performed on the stream data when the encryption information indicates that the stream data is encrypted and the common key preparation information indicates that the common key is normally prepared;
identifies a third state where encrypted stream data is received and the first decryption process is abnormally performed on the stream data when the encryption information indicates that the stream data is encrypted and the common key preparation information indicates that the common key is not normally prepared; and presents the first state, the second state, or the third state.

8. The receiver device according to claim 7,
wherein the presenter
includes a lamp that can illuminate in a first color or in a second color;
associates the first state, the second state, and the third state with a first lamp state where the lamp is prohibited from illuminating in the first color or in the second color, a second lamp state where the lamp is allowed to illuminate in the first color only, or a third lamp state where the lamp is allowed to illuminate in the second color only; and
exercises control to place the lamp in the first lamp state, in the second lamp state, or in the third lamp state as appropriate in order to present the first state, the second state, or the third state.

9. The receiver device according to anyone of claims 6 to 8,
wherein the common key is transmitted to the receiver device after being further encrypted by a second encryption method,
the generator
performs a second decryption process on the encrypted common key by a second decryption method, which is related to the second encryption method, when the encrypted common key is received by the receiver;
supplies the common key to the decryptor and generates the common key preparation information indicating that the common key is normally prepared when the second decryption process is successfully performed before the first decryption process of the decryptor; and
generates in the other situations the common key preparation information indicating that the common key is not normally prepared.

10. The receiver device according to claim 9,
wherein the second encryption method and the second decryption method are a public key cryptosystem based on a public key and a decryption method that is associated with the public key cryptosystem and based on a private key.

11. The receiver device according to claim 10,
wherein the common key encrypted with the public key is included in meta data (34) of the stream data that is encrypted with the common key, the meta data is superposed over the stream data, and the stream data over which the meta data is superposed is transmitted to the receiver device;
the generator
generates the encryption information indicating that the stream data is encrypted, extracts the encrypted common key from the meta data, and performs the second decryption process, which uses the private key corresponding to the public key, on the common key when the meta data is superposed over the stream data received by the receiver device; and
generates the encryption information indicating that the stream data is not encrypted when the meta data is not superposed over the stream data received by the receiver device.

12. The receiver device according to claim 11,
wherein the stream data uses a plurality of common keys, an identifier other than a special value is assigned to each of the plurality of common keys, and the identifier for each of the plurality of common keys is included in the meta data; and
the generator prohibits the generation of the encryption information indicating that the stream data is encrypted and generates the encryption information indicating that the stream data is not encrypted when the identifier included in the meta data is the special value in a situation where the meta data is superposed over the stream data received by the receiver device.

13. The receiver device according to anyone of claims 6 to 12, further comprising a reproduction controller, which controls the reproduction of first stream data, which is obtained when the decryptor performs the first decryption process on the encrypted stream data, when the decryption controller permits the execution of the first decryption process; and controls the reproduction of second stream data, which is received by the receiver and not encrypted, when the decryption controller prohibits the execution of the first decryption process.

14. The receiver device according to claim 13,
wherein, when the common key preparation information indicates that the common key is not normally prepared in a situation where the decryption controller permits the execution of the first decryption process, the reproduction controller prohibits the reproduction of the first stream data but controls the reproduction of data generated according to predefined rules.

15. The receiver device according to claim 14,
wherein the data whose reproduction is controlled by the reproduction controller instead of the first stream data is image data corresponding to a predetermined stationary image.

16. The receiver device according to claim 14,
wherein the data whose reproduction is controlled by the reproduction controller instead of the first stream data is image data corresponding to a predetermined still picture among the first stream data whose reproduction is controlled before the reproduction control of the data.

17. The receiver device according to anyone of claims 5 to 16,
wherein the encrypted stream data is transmitted to the receiver device (202)via a first route and the common key used by the encrypted stream data is transmitted to the receiver device via a second route (203, 211); and
the receiver (202) includes
a first receiver (231), which receives the unencrypted stream data or the encrypted stream data transmitted via the first route, and
a second receiver (232), which receives the common key transmitted via the second route.

18. A reception method for a receiver device, which receives stream data that is transmitted after being encrypted by a predetermined encryption method or is transmitted without being encrypted,
the reception method comprising the step of:
determining whether the stream data received by the receiver device is encrypted and generating encryption information that indicates the obtained determination result.

19. A program, which when executed by a computer controls a device that receives stream data transmitted after being encrypted by a predetermined encryption method or stream data transmitted without being encrypted,
the program comprising the step of:
determining whether the stream data received by the receiver device is encrypted and generating encryption information that indicates the obtained determination result.
